# EUROPEAN PATENT SPECIFICATION

(11) **EP 4 161 729 B1**
(45) Date of publication and mention of the grant of the patent: **03.07.2024**
(21) Application number: 21736695.4
(22) Date of filing: 08.06.2021
(51) Int. Cl.: B23K 26/082, B23K 26/08, B23K 26/03, B23K 26/362, B23K 26/38, B23K 26/70, B23K 37/02, G02B 26/10

(54) **LASER MACHINE, LASER MACHINE AND LASER BEAM ALIGNMENT DETECTION TOOL ASSEMBLY, ALIGNMENT AND CALIBRATION METHOD**
LASERMASCHINE, LASERMASCHINE UND LASERSTRAHLAUSRICHTUNGSERKENNUNGSWERKZEUGANORDNUNG, AUSRICHTUNGS- UND KALIBRIERUNGSVERFAHREN
MACHINE LASER, MACHINE LASER ET ENSEMBLE OUTIL DE DÉTECTION D'ALIGNEMENT DE FAISCEAU LASER, PROCÉDÉ D'ALIGNEMENT ET D'ÉTALONNAGE

(30) Priority: 08.06.2020 IT 202000013606
(43) Date of publication of application: 12.04.2023
(73) Proprietor: ML ENGRAVING S.R.L., 24020 Onore (BG) (IT)
(72) Inventor: GIUDICI, Paolo, 24020 Onore (BG) (IT); FORTINA, Lorenzo, 24020 Onore (BG) (IT)
(74) Representative: Crippa, Paolo Ernesto
(86) International application number: PCT/IB2021/055023
(87) International publication number: WO 2021/250561

(56) References cited:
- CN-U- 208 391 288
- US-A1- 2007 221 639
- US-A1- 2010 220 373
- US-A1- 2019 001 436

## Description

### . Field of the invention

**.** The present invention relates to a laser machine, as well as to a laser machine and laser beam alignment detection tool assembly, as well as to an alignment and calibration method according to the preamble of claims 1, 13 and 15 respectively (see for example CN 208 391 288 U), and to a laser beam alignment detection tool for a laser machine according to the preamble of claim 17 (see for example US 2010/220373 A1).

### . Prior art

. In the context of material-removing laser machines which allow a workpiece to be cut, drilled or marked, generally a laser beam is projected on a plane in the direction of the workpiece by a galvanometric laser head rotatable about a rotation axis of the machine.

. In such laser machines, the galvanometric laser head comprises a laser head frame which can be rotated with respect to a laser machine frame via a rotation joint. In particular, the laser head frame supports at least one galvanometric scanner and a beam emitter or an optical fiber emission terminal of a fiber laser emitter, rigidly restrained to the laser head frame. In this way, the emission terminal defines an optical axis of a laser beam which is always integral with the laser head. Therefore, the optical axis is independent of the machine rotation axis about which the galvanometric laser head can rotate and the optical axis can be factory-aligned before the galvanometric laser head is mounted on the laser machine to be rotatable about the rotation joint.

**.** For example, US2011120981 discloses a laser machine having a rotating galvanometric laser head of the type described above.

. In this technological field, laser machines are used to work pieces of increasingly smaller dimensions and complex geometries.

**.** A limit encountered in the processing of small pieces and pieces with complex geometries lies in the size of the rotating galvanometric laser head.

**.** In particular, the efficiency of approaching the surfaces is limited by the size of the laser head, and consequently for certain processes using machines provided with known types of rotating laser heads, a high number of movements of the piece in the machine is required, or of the laser head when movable on several axes, which make the production process particularly slow and expensive.

**.** On the other hand, due to the overall dimensions of known laser heads, only limited movements of the operating unit with respect to the workpiece or vice versa are allowed to avoid collisions of the operating unit with the workpiece and/or other parts of the machine.

. Rotating galvanometric laser heads of known type comprising at least one galvanometric scanner and a laser beam emission terminal integrally restrained to the laser head frame or to the rotation joint so that they rotate integrally via a rotation joint. Such rotating galvanometric laser heads therefore have a size equal at least to the size of such opto-mechanical components.

. Furthermore, in such laser machines, the rotational joint supports the rotatable laser head and all its opto-mechanical components. Therefore, the sizing of the rotational joint and the rotational movement speed of the galvanometric laser head are strictly dependent on the suspended masses of the opto-mechanical components of the laser head.

. There is a strongly felt need to devise laser machines provided with rotating galvanometric laser heads in which the laser head has as small a footprint as possible so as to be able to approach complex geometry surfaces efficiently, reducing processing time.

**.** At present, depending on the specific requirements of some processes, solutions of rotating galvanometric laser heads are known which have opto-mechanical components arranged with respect to each other according to different geometric arrangements. In this way it is possible to obtain, for example, elongated rotating laser heads, having a prevalent extension along one direction, or rotating laser heads having a prevalent extension in a plane.

. Document CN208391288 shows in one embodiment a 5-axis laser machine, of which three are linear and two are rotary, wherein the laser emission terminal is arranged upstream of two rotation joints which allow the rotation of a galvanometric laser head with respect to the laser emission terminal, wherein the galvanometric laser head comprises a highly bulky dynamic focusing system (Z-shift), wherein the optical and/or opto-mechanical elements upstream of the galvanometric laser head are fixedly restrained to the frame of the laser machine or laser machine components.

**.** These solutions, although responding to problems of overall dimensions with respect to specific processes, do not reduce the absolute dimensions of the galvanometric laser head nor the total masses of the components supported by the galvanometric laser head or do not allow repeatable and reliable processes over time to be obtained.

**.** The need is therefore strongly felt to produce laser machines which have rotating galvanometric laser heads with reduced dimensions.

**.** The need is strongly felt to produce laser machines having laser heads with reduced dimensions which are easily calibrated and in which the optical axis of the laser beam is easily aligned.

. The need is also felt to implement laser machines having rotating galvanometric laser heads that allow access to the surfaces of the workpiece in a rapid and highly precise manner, to obtain highly precise machining in a shorter time compared to what is known.

### . Solution

. The present invention aims to provide a laser machine which has a laser head with reduced overall dimensions and which can be easily calibrated.

**.** This and other objects and advantages are achieved with a laser machine according to claim 1, as well as a laser machine and laser beam alignment detection tool assembly according to claim **13,** as well as an alignment and calibration method according to claim 15, and as well as a laser beam alignment detection tool for a laser machine according to claim 17.

The preferred embodiments of the present invention are defined in the dependent claims.

. From the analysis of this solution it emerged that the proposed solution allows the number of opto-mechanical components arranged on a galvanometric rotating head to be reduced with respect to what is known, consequently reducing the total size of the rotating galvanometric head.

**.** Furthermore, the proposed solution allows a laser machine having a galvanometric laser head to be implemented which comprises and supports a smaller number of reduced opto-mechanical and optoelectronic components with respect to what is known. Consequently, the proposed solution allows the suspended masses supported by the galvanometric laser head to be reduced compared to what is known.

**.** Furthermore, the proposed solution allows the mass of the suspended galvanometric laser head supported by the rotation joint of the laser machine to be reduced with respect to what is known, and therefore the proposed solutions allow a higher positioning speed of the galvanometric laser head and a reduction of the waiting time for the damping of inertias, and consequently a greater processing speed.

**.** Still further, the proposed solutions allow greater flexibility in use to be obtained, in fact the CAM software, which during the computation process verifies the collisions between the machined workpiece and the operating unit, is able to find more mathematical solutions for the positioning of the galvanometric laser head in space with respect to what is known.

**.** Furthermore, by virtue of the proposed solutions, in which the galvanometric laser head has a reduced size, it is possible to access surface areas of the workpiece with a better angle of attack following the surface normal more faithfully. Furthermore, with these features of approach to the surfaces, the laser beam is more efficient in excavation, the machined surface is more homogeneous and the coupling precision between the various placements increases, especially the vertical couplings.

. Furthermore, by virtue of the proposed solutions, the reduced volume and size of the galvanometric laser head allows better access to the surfaces to be machined by reducing the number of tangential placements necessary to maintain the focal distance on large inclined planes. The decrease in movements of the mechanical positioning system translates into a decrease in execution times.

. Furthermore, by virtue of the proposed solutions, improvements in speed and positioning of the galvanometric laser head with respect to the surfaces to be machined are allowed, avoiding in many cases the use of dynamic focusing systems (Z-Shift) thus reducing construction costs.

. Furthermore, by avoiding the support of dynamic focusing systems (Z-shift) by the galvanometric laser head, it is possible to further reduce the masses supported by the rotational joint upstream of the galvanometric head, allowing greater placement speed.

**.** Furthermore, by avoiding the support of dynamic focusing systems (Z-shift) by the galvanometric laser head, it is possible to simplify even more the calibration operations and costs, as well as maintenance costs. In fact, the presence of dynamic focusing systems (Z-shift) configured to expand the laser beam and supported by the galvanometric laser head makes it extremely difficult to calibrate the laser machine permanently irrespective of the angular position of the galvanometric laser head with respect to at least one rotation joint and irrespective of the expansion degree of the laser beam determined by the dynamic focusing system (Z-shift).

. Still further, by virtue of the reduced size of the galvanometric laser head and the reduced size of the operating unit of the laser machine, the risk of mechanical collisions of the system during manual operations between workpieces and machine parts is reduced.

**.** Furthermore the solutions proposed in which more than one rotation joint is provided downstream of the laser emission terminal allow the masses and dimensions supported by such rotation joints to be further reduced.

### . Figures

**.** Further features and the advantages of the laser machine, of the assembly and of the method will be apparent from the following description of preferred embodiment examples thereof, provided purely by way of non-limiting example, with reference to the accompanying figures, in which:

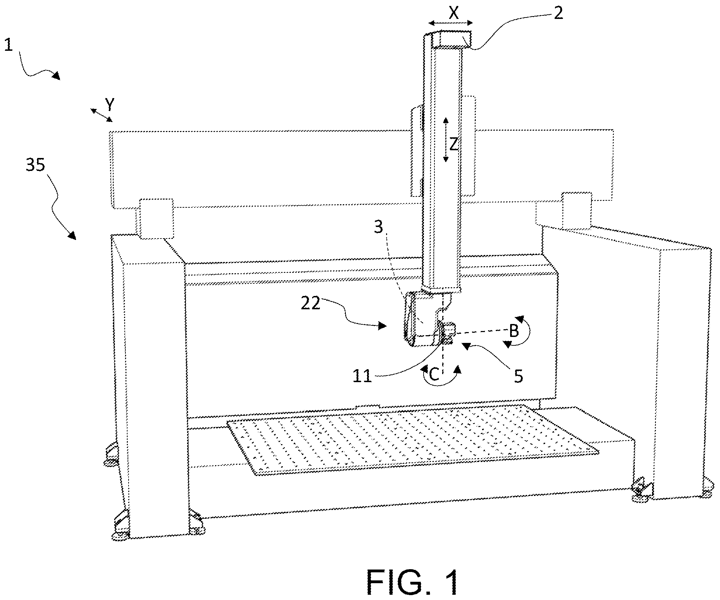

- Figure 1 shows an axonometric overall view of a laser machine from the outside according to the present invention;

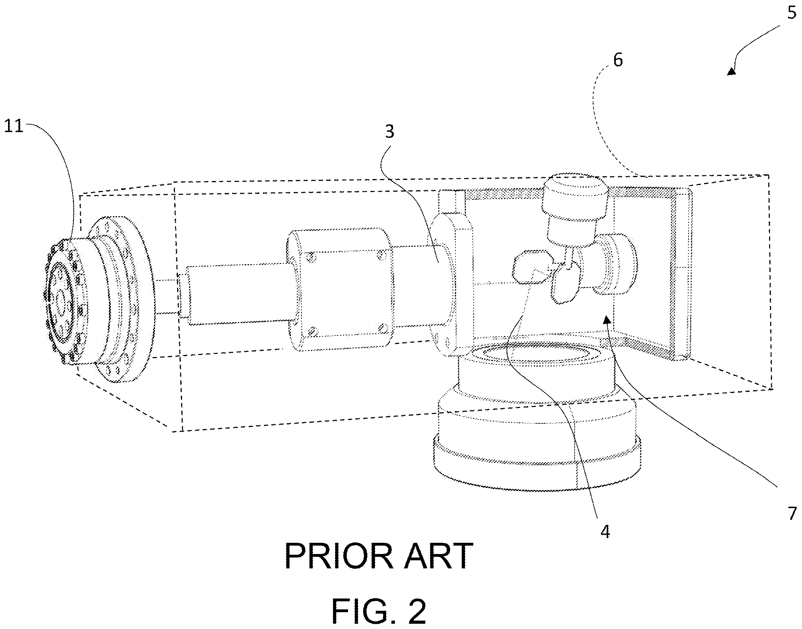

- Figure 2 shows a partially sectional side view of an example of a rotating laser head of a laser machine known in the prior art;

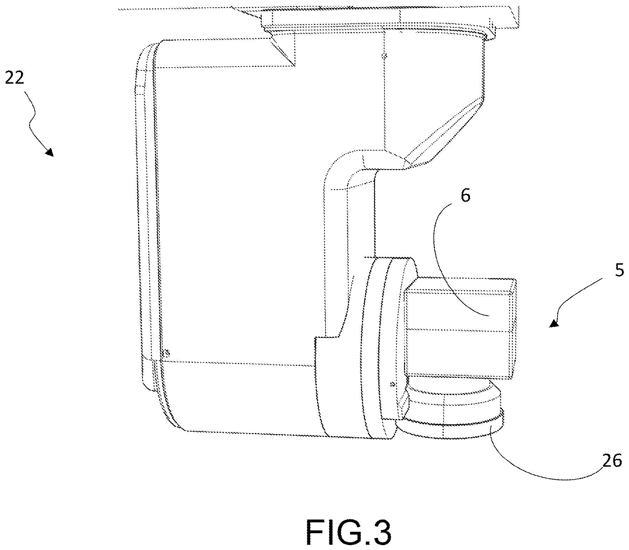

- Figure 3 shows a partially sectional axonometric view of a detail of Fig. 1, which shows a galvanometric laser head connected by means of a first numerical control rotation joint to an operating unit which accommodates a laser emission terminal therein;

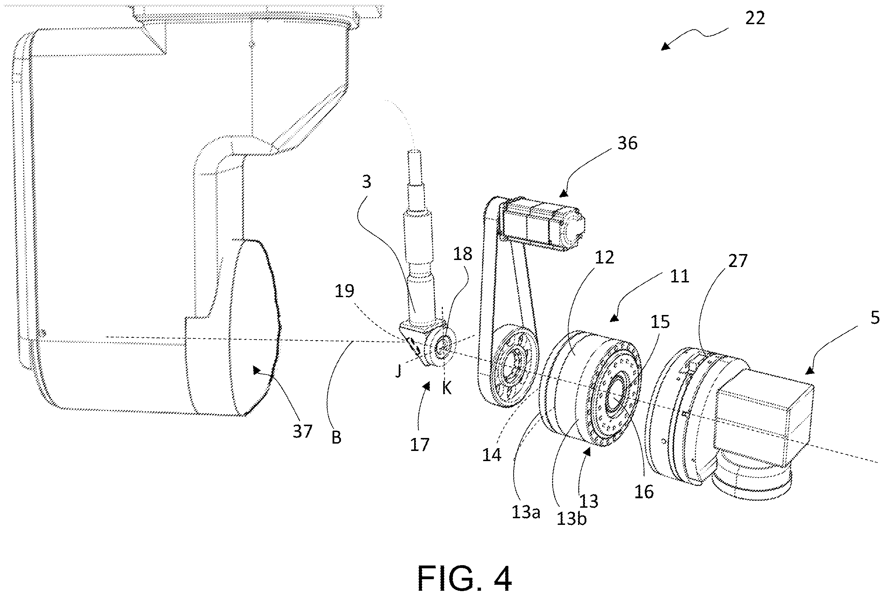

- Figure 4 shows an exploded axonometric view of the galvanometric laser head and the operating unit of Fig. 3, in which the first numerical control rotational joint is arranged along the optical axis between the galvanometric laser head and an emission terminal positioned according to a first arrangement;

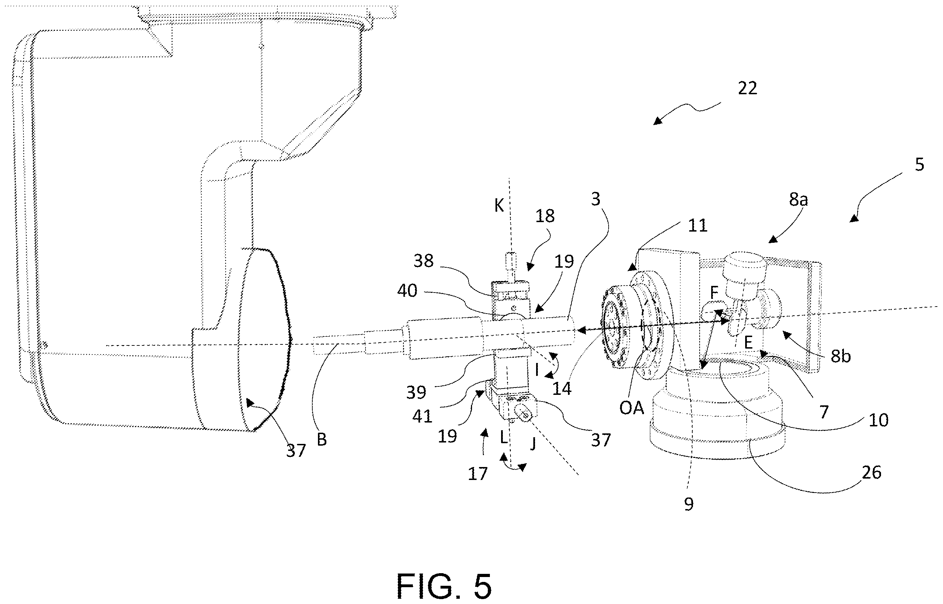

- Figure 5 shows an exploded axonometric view of the galvanometric laser head and the operating unit of Fig. 3, which shows the numerical control rotational joint arranged along the optical axis between the laser head and a fiber terminal of a fiber laser positioned according to a second arrangement, wherein the galvanometric laser head is partially sectional so as to show the galvanometric scanner comprising a pair of oscillating mirrors;

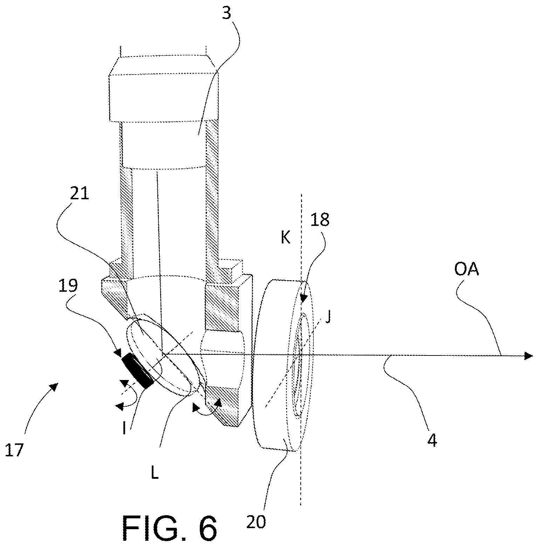

- Figure 6 shows an axonometric view of a partially sectional enlarged detail of Figure 4, wherein optical axis alignment means, a bounce mirror rotatable with respect to a first beam rotation axis and to a second beam rotation axis are shown, and a planar translational support which allows the beam terminal to translate along a first beam translation axis and a second beam translation axis;

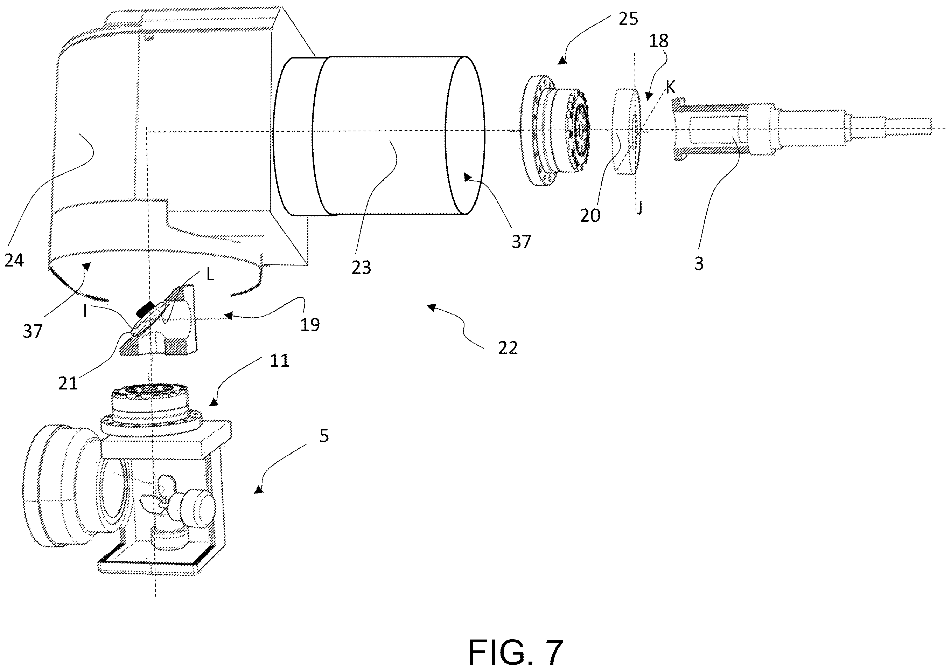

- Figure 7 shows an exploded view of an operating unit comprising a first operating unit part and a second operating unit part, and a partially sectional galvanometric laser head of a laser machine according to the present invention, wherein the first operating unit part, the second operating unit part and the galvanometric laser head are in cascade, wherein the galvanometric head is rotatable with respect to the second operating unit part by means of a first numerical control rotational joint and the second operating unit part is rotatable with respect to said first operating unit part by means of a second numerical control rotation joint, wherein the emission terminal is upstream of both the first rotation joint and the second rotation joint;

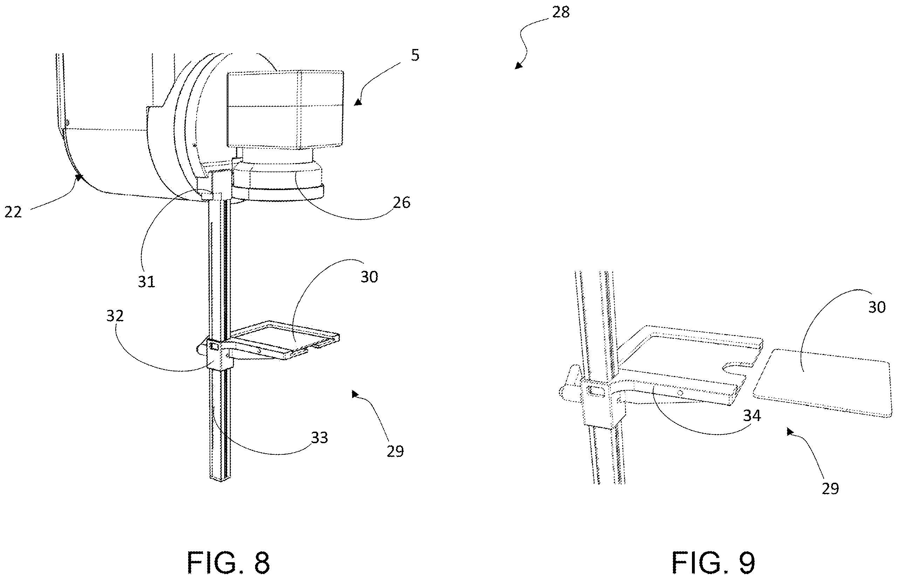

- Figure 8 shows an axonometric view of a laser beam alignment detection tool of the laser machine and tool assembly according to the present invention, wherein the tool is connected in such a way as to rotate integrally with the rotating galvanometric laser head and a target surface coupled to an adjustment stem by movement means is visible;
- Figure 9 shows an axonometric view of a detail of Figure 8 in which a removable and replaceable target surface is visible;

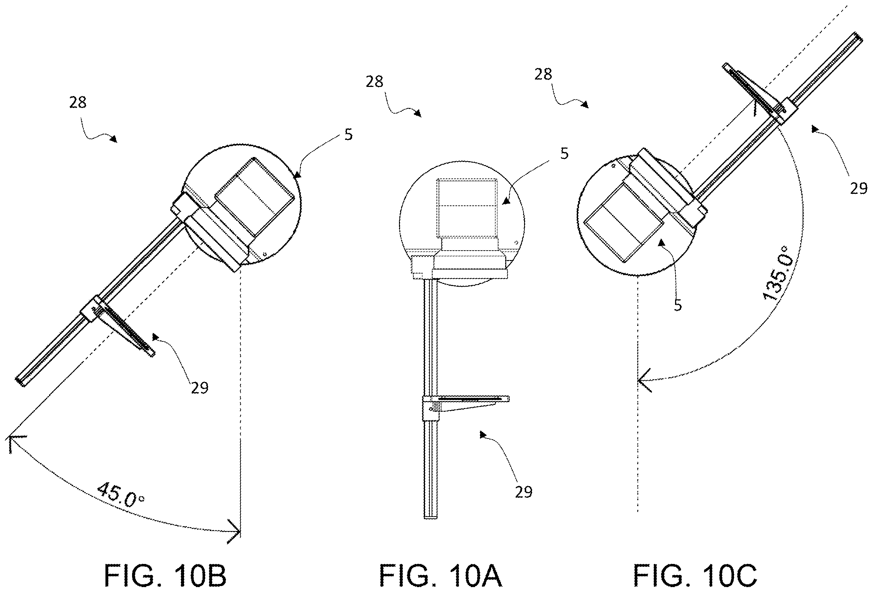

- Figures 10A-10C show a front view of the laser machine and detection tool assembly in three different head angular positions Theta -, Theta, Theta + according to the present invention, wherein the laser head rotates about a laser beam entering said laser head;

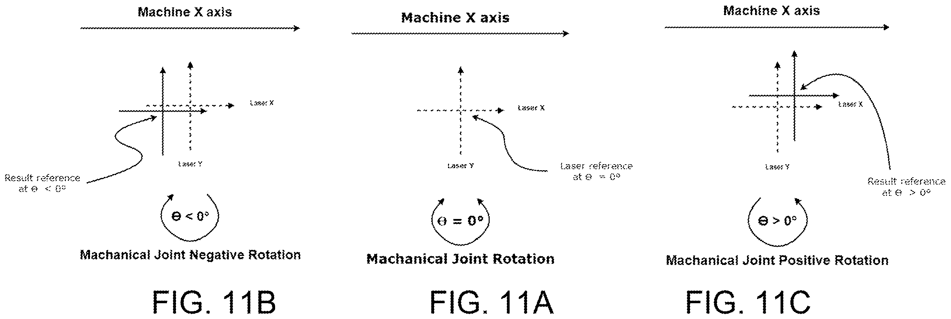

- Figures 11A-11C schematically show the projection of the laser beam in the three positions of the galvanometric laser head of the corresponding Figures 10A-10C, wherein the deviation between the beam projection with respect to a beam projection taken as a reference before the laser machine is aligned is visible, so that the machine optical axis upstream of the galvanometric scanner is aligned with the machine optical axis downstream of the galvanometric laser head for each angular position of the galvanometric laser head.

### . Description of some preferred embodiment examples

**.** In accordance with a general embodiment, a laser machine 1 for material removual is provided.

. Said laser machine 1 comprises at least one emission terminal 3, an operating unit 22, a galvanometric laser head 5 and at least a first numerical control rotation joint 11.

**.** Said laser machine 1 comprises at least one movement axis X, Y, Z controlled by a numerical control unit.

. Said emission terminal 3 is associated with a laser emitter 2, and in particular such emission terminal 3 is adapted to emit a laser beam 4.

**.** Said emission terminal 3 defines an optical beam axis OA along which said laser beam 4 is propagated.

. Said operating unit 22 has an operating unit housing 37, and said at least one emission terminal 3 is accommodated in said operating unit housing 37.

. Said galvanometric laser head 5 comprises a laser head frame 6 and at least one galvanometric scanner 7, or scanning system 7. The galvanometric scanner 7 is restrained to said laser head frame 6.

**.** The galvanometric scanner 7 comprises a first galvanometric mirror 8a and a second galvanometric mirror 8b.

. The first galvanometric mirror 8a and the second galvanometric mirror 8b can respectively oscillate about a first mirror axis E and a second mirror axis F.

. According to an embodiment, the first mirror axis E is perpendicular to the second mirror axis F.

**.** Said laser head frame 6 has a laser head inlet opening 9 and a laser head outlet opening 10.

**.** Said first rotation joint 11 defines a first laser machine rotation axis B.

**.** Said first rotation joint 11 is configured to rotate said galvanometric laser head 5 about said first laser machine rotation axis B at least between a first angular head position and a second angular head position.

. Said optical beam axis OA extends from said emission terminal 3 to at least said laser head outlet opening 10.

. Said rotation joint 11 is arranged along said optical beam axis OA downstream of said emission terminal 3 so as to rotate said at least one galvanometric scanner 7 with respect to said emission terminal 3 about said first laser machine rotation axis B.

**.** According to an embodiment, the galvanometric laser head 5 has a size substantially equal to the size of the galvanometric scanner 7.

. Furthermore, since the emission terminal 3 is separated from the rotating galvanometric laser head 5, the bulk due for example to a possible optical fiber which carries the laser beam to the emission terminal 3 is completely absent in the rotation area of the galvanometric laser head 5.

. According to an embodiment, said operating unit 22 and said galvanometric laser head 5 are in cascade.

**.** According to an embodiment, said at least a first rotation joint 11 is arranged along said optical beam axis OA between said emission terminal 3 and said galvanometric laser head 5.

. According to an embodiment, said at least one first rotation joint 11 is connected to said operating unit 22 and to said galvanometric laser head 5.

. According to an embodiment, said at least one first rotation joint 11 supports said galvanometric laser head 5 so as to rotate said galvanometric laser head 5 with respect to said operating unit 22.

. Therefore, the first rotation joint 11 can be sized in such a way as to support a reduced weight with respect to known solutions of the prior art as it is designed to support the components of the galvanometric laser head 5. Consequently, the first rotational joint 11 can also be sized in such a way as to have a smaller footprint than is known in the prior art.

**.** According to an embodiment, the galvanometric laser head 5 is configured to rotate between said first angular position and said second angular position by at least 240° with respect to said first machine rotation axis B.

**.** According to an embodiment, the galvanometric laser head 5 is configured to rotate between said first angular position and said second angular position by at least 270° with respect to said first machine rotation axis B.

**.** According to an embodiment, the galvanometric laser head 5 is configured to rotate between said first angular position and said second angular position by at least 290° with respect to said first machine rotation axis B, or +- 145° with respect to a central angular position.

. According to an embodiment, said machine 1 comprises a focus lens 26 fixed to said laser head frame 6 at said laser head outlet opening 10. Therefore in this case, the overall dimensions of the rotating galvanometric head 5 are equal to the dimensions of the galvanometric scanner 7, of the laser head frame 6 and of the focus lens 26.

**.** According to an embodiment, said galvanometric laser head 5 exclusively comprises said focus lens 26 avoiding supporting dynamic focusing systems (Z-shift).

. According to an embodiment, said focus lens 26 is an F-theta lens.

. According to an embodiment, said focus lens 26 has a respective focal lens distance.

**.** According to an embodiment, said laser beam 4 is focused at said focal lens distance for each angular head position of said galvanometric laser head 5, avoiding the use of dynamic focusing systems (Z-shift).

. According to an embodiment, said optical beam axis OA comprises a first portion of optical beam axis and a second portion of optical beam axis.

**.** According to an embodiment, said first portion of optical beam axis extends between said emission terminal 3 and said galvanometric scanner 7.

**.** According to an embodiment, said first portion of optical beam axis extends between said emission terminal 3 and said first galvanometric mirror 8a.

**.** According to an embodiment, said second portion of optical beam axis extends between said galvanometric scanner 7 and at least said galvanometric head outlet opening 10.

**.** According to an embodiment, said second portion of optical beam axis extends between said second galvanometric mirror 8b and at least said focus lens 26 fixed at said galvanometric head outlet opening 10.

**.** According to an embodiment, said laser machine 1 comprises optical axis alignment means 17 configured to align said first portion of optical beam axis with said second portion of optical beam axis so that said first portion of optical beam axis is aligned with said second portion of optical beam axis for each angular position of said galvanometric laser head 5.

**.** It should be noted that in the laser machine 1 according to the present invention, the alignment of the optical axis can be carried out in a simple manner by means of said alignment means 17 to obviate, for example, imperfections in the mechanical alignment between the first rotation joint 11 and the laser head inlet opening 9.

. According to an embodiment, said optical axis alignment means 17 comprise an optical axis translational adjustment system 18.

**.** According to an embodiment, said optical axis translational adjustment system 18 is configured to translate said optical axis OA with respect to at least a first beam translation axis J, wherein said first beam translation axis J is transverse and/or incident with respect to said optical axis OA.

**.** According to an embodiment, said at least one optical axis translational adjustment system 18 is configured to translate said optical axis OA with respect to at least a second beam translation axis K, wherein said second beam translation axis K is transverse and/or incident with respect to said optical axis OA.

**.** According to an embodiment, said second translation axis K is perpendicular to said first translation axis J.

**.** According to an embodiment, said translational adjustment system 18 is configured to adjust the spatial position of said first portion of optical beam axis with respect to said galvanometric scanner 7 along two perpendicular translation directions.

. According to an embodiment, said optical axis alignment means 17 comprise an angular adjustment system 19.

**.** According to an embodiment, said angular adjustment system 19 is configured to rotate said optical axis OA with respect to a first beam rotation axis I, wherein said first beam rotation axis I is transverse and/or incident to said optical axis OA.

**.** According to an embodiment, said angular adjustment system 19 is configured to adjust the roll, pitch and yaw of said first portion of optical axis.

**.** According to an embodiment, said angular adjustment system 19 is configured to rotate said optical axis OA with respect to a second beam rotation axis L, wherein said second beam rotation axis L is transverse and/or incident to said optical axis OA.

**.** According to an embodiment, said second beam rotation axis L is perpendicular to said first beam rotation axis I.

**.** According to an embodiment, said translational adjustment system 17 comprises at least one planar translational support 20 configured to translate said emission terminal 3 along said first beam translation axis J and along a second beam translation axis K, wherein said first beam translation axis J and said second beam translation axis K belong to a plane which is transverse and incident to said optical beam axis OA.

**.** According to an embodiment, said translational adjustment system 18 comprises a first translational guide 37 along the first beam translation axis J and a second translational guide 38 along the second beam translation axis K, wherein the second translational guide 38 has a support portion 39 on which the emission terminal 3 is restrained, as shown in Figure 5. According to an embodiment, said support portion 39 comprises said angular adjustment system 19 configured to rotate said optical axis with respect to at least said first rotation axis I, wherein said angular adjustment system is configured to rotate said emission terminal 3 with respect to at least said first beam rotation axis I. According to an embodiment, said angular adjustment system 19 comprises a first angular ring nut 40 which allows said emission terminal 3 to be rotated with respect to the first beam rotation axis I, wherein said first beam rotation axis I is transverse and/or incident with respect to said second beam translation axis K.

**.** According to an embodiment, said first translational guide 37 supports said second translational guide 38.

**.** According to an embodiment, said angular adjustment system 19 is further configured to rotate said emission terminal 3 with respect to the second beam rotation axis L, wherein said second beam rotation axis L is perpendicular and/or incident with respect to said first beam translation axis J. According to an embodiment, said angular adjustment system 19 comprises a second angular ring nut 41 configured to rotate said emission terminal 3 with respect to the second beam rotation axis L.

. According to an embodiment, said first translational guide 37 comprises said second angular ring nut 41 so as to rotate said second translational guide 38 about said second beam rotation axis L.

**.** According to an embodiment, said support portion 39 comprises said second angular ring nut 41.

**.** According to an embodiment, said planar translational support 20 comprises a translational support ring of a known type.

**.** According to an embodiment, said angular adjustment system 19 and said translational adjustment system 18 are high-precision opto-mechanical adjustment systems of a known type.

**.** According to an embodiment, said angular adjustment system 19 comprises at least one bounce mirror 21 arranged between said emission terminal 3 and said galvanometric laser head 5 in such a way as to reflect said laser beam 4 in the direction of said galvanometric laser head 5, as shown in Figure 4.

. According to an embodiment, said angular adjustment system 19 comprises adjustment means configured to adjust the inclination of said bounce mirror 21 with respect to said first beam rotation axis I and to a second beam rotation axis L, wherein said first beam rotation axis I and said second beam rotation axis L belong to a plane transverse and incident to said optical beam axis OA.

**.** According to an embodiment, said bounce mirror 21 is arranged to be tiltable between a rest position and at least one adjustment position, wherein in said rest position said bounce mirror 21 is at 45° with respect to said emission terminal 3 and to said galvanometric laser head 5.

**.** According to an embodiment, said optical beam translational adjustment system 18 is configured to vary the position of the emission terminal 3 with respect to the rotational joint 11 in a Cartesian space, as well as with respect to the head inlet opening 9, as well as with respect to the first galvanometric mirror 8A.

**.** According to an embodiment, said translational adjustment system 18 and said angular adjustment system 19 have a manual or electromechanical adjustment.

**.** According to an embodiment, said bounce mirror 21 is positioned at 45° along said optical axis OA between said emission terminal 3 and said rotation joint 11 in such a way that said laser beam 4 is reflected in the direction of said galvanometric laser head 5.

**.** According to an embodiment, said rotational movement system 19 is configured to regulate the roll, pitch and yaw of said bounce mirror 21.

**.** According to an embodiment, said laser machine 1 comprises at least a second numerical control rotation joint 25 which defines a second laser machine rotation axis C.

**.** According to an embodiment, said second rotation joint 25 allows rotations of +- 330 degrees about said second laser machine rotation axis C, with respect to a second joint central angular position.

**.** According to an embodiment, said second laser machine rotation axis C is perpendicular to said first laser machine rotation axis B.

**.** According to an embodiment, said operating unit 22 comprises at least a first operating unit part 23 and a second operating unit part 24.

**.** According to an embodiment, said first operating unit part 23, said second operating unit part 24 and said galvanometric laser head 5 are connected in cascade.

**.** According to an embodiment, said operating unit is mechanically misaligned with respect to said galvanometric laser head 5. According to an embodiment, said first operating unit part 23 is mechanically misaligned with respect to said second operating unit part 24. According to an embodiment, said second operating unit part 24 is mechanically misaligned with respect to said galvanometric laser head 5. In this description, mechanically misaligned means that a laser machine component connected to a rotational joint having a joint rotation axis has a connection portion to the joint which is inclined with respect to the joint rotation axis by an inclination angle of less than a few degrees, preferably less than 5 degrees, for example due to manufacturing imperfections or due to wear or even due to the optical levers that are created between an optical component and a rotational joint. Consequently, the laser machine component rotates about said joint rotation axis varying its position with respect to the rotation axis according to the angular position of the joint.

**.** According to an embodiment, said at least a second numerical control rotation joint 25 is configured to rotate said second operating unit part 24 with respect to said first operating unit part 23 about said second laser machine rotation axis C at least between a first angular position of the first operating unit part and a second angular position of the first operating unit part.

**.** According to an embodiment, said first numerical control joint 11 is connected to said galvanometric laser head 5 and to said second operating unit portion 24 so as to rotate said galvanometric head 5 with respect to said second operating unit portion 24 about said first laser machine rotation axis B at least between said first angular head position and said second angular head position.

**.** According to an embodiment, said second numerical control rotation joint 25 is arranged downstream of said emission terminal 3 and upstream of said at least a first numerical control rotation joint 11.

**.** According to an embodiment, said emission terminal 3 is accommodated in said first operating unit part 23 and is movably supported by said planar translational support 20.

**.** According to an embodiment, said bounce mirror 21 is accommodated in said second operating unit part 24 so as to reflect said laser beam 4 in the direction of said galvanometric laser head 5.

**.** According to an embodiment, said optical beam axis OA comprises a third portion of optical beam axis and a fourth portion of optical beam axis, wherein said third portion of optical beam axis extends between said emission terminal 3 and said bounce mirror 21, and wherein said fourth portion of optical beam axis extends between said bounce mirror 21 and at least said galvanometric head outlet opening 10.

**.** According to an embodiment, said optical axis alignment means 17 are configured to align said third portion of optical beam axis OA3 with said fourth portion of optical beam axis so that said third portion of optical beam axis is aligned with said fourth portion of optical beam axis for each angular position of said second operating unit part 24 with respect to said second laser machine rotation axis C when said galvanometric laser head 5 is in a fixed angular position with respect to said first laser machine rotation axis B.

**.** According to an embodiment, said optical axis alignment means 17 are configured to align said first portion of optical beam axis, which extends from said emission terminal to said galvanometric scanner, with said second portion of optical beam axis, which extends from said galvanometric scanner beyond said laser head outlet opening, so that said first portion of optical beam axis is aligned with said second portion of optical beam axis for each angular position of said galvanometric laser head 5 with respect to said first laser machine rotation axis B when said second operating unit part is in a fixed angular position with respect to said second laser machine rotation axis C.

**.** By virtue of this solution, it is possible to further reduce the dimensions of the laser machine around the galvanometric laser head 5. By virtue of the provision of a second rotation joint 25, further opto-mechanical components can be moved away from the galvanometric laser head 5, obtaining a greater freedom of positioning of the galvanometric laser head 5 with respect to the workpiece and its surfaces.

**.** It should be noted that in the laser machine 1 according to the present invention, the alignment of the optical axis can be carried out in a simple manner by means of said alignment means 17 to obviate, for example, imperfections in the mechanical alignment between the first rotation joint 11 and the laser head inlet opening 9, and between the second rotation joint 25 and the second operating unit part 24 to which it is connected.

**.** According to an embodiment, said laser machine 1 comprises a laser machine frame 35.

**.** According to an embodiment, said first numerical control rotation joint 11 comprises a first joint stator 12 and a first joint rotor 13.

**.** According to an embodiment, said first joint stator 12 and said first joint rotor 13 are coaxial.

**.** According to an embodiment, said first joint stator 12 is connected to said operating unit 22.

**.** According to an embodiment, said first joint rotor 13 is fastened to said galvanometric laser head 5.

**.** According to an embodiment, said first joint rotor 13 is rotatable with respect to said first joint stator 12 about said first laser machine rotation axis B.

**.** According to an embodiment, said laser machine 1 comprises drive means configured to rotate said numerical control rotor joint.

**.** According to an embodiment, said first joint 11 has a first joint through cavity 22 which extends along said first machine rotation axis B between a first joint inlet opening 14 and first joint outlet opening 15.

**.** According to an embodiment, said first joint outlet opening 15 faces said laser head inlet opening 9.

**.** According to an embodiment, said first joint inlet opening 14 defines a plane perpendicular to said first machine rotation axis B, and said first joint outlet opening 15 and/or said laser head opening 9 defines a plane inclined with respect to said first machine rotation axis B by an opening angle, wherein said opening angle is less than a few degrees, preferably less than 5 degrees.

**.** According to an embodiment, said laser head inlet opening 9 faces said first galvanometric mirror 8a and said laser head outlet opening 10 faces said second galvanometric mirror 8b.

**.** According to an embodiment, said first joint rotor 13 comprises a low speed shaft portion 13a and a multiplied speed shaft portion 13b, wherein said joint stator 12 is interposed between said low speed shaft portion 13a and said multiplied speed shaft portion 13b. Said drive means are connected to said low speed shaft portion 13a and said multiplied speed shaft portion 13b is connected to said low speed shaft portion 13a, and said multiplied speed shaft portion 13b is connected to said galvanometric laser head 5.

**.** According to an embodiment, said second rotation joint 25 is mechanically similar to said at least a first rotation joint 11.

**.** According to an embodiment, said laser machine 1 is a multi-axis laser machine.

**.** According to an embodiment, said laser machine 1 is a machine with at least 4 axes.

**.** According to an embodiment, said machine rotation axis B is a horizontal axis.

**.** According to an embodiment, said emission terminal 3 is an optical fiber terminal of a fiber laser emitter.

**.** According to an embodiment, said emission terminal 3 comprises a beam collimator.

**.** According to an embodiment, said laser beam is an impulse laser beam.

**.** According to an embodiment, said galvanometric scanner 7 is designed to be mechanically aligned and centered with respect to said laser head inlet opening 9 and said laser head outlet opening 10.

**.** According to an embodiment, said first portion of optical beam axis is aligned and centered with respect to said first galvanometric mirror 8a in each angular position of said galvanometric laser head 5.

**.** According to an embodiment, said beam 4 is projected onto a projection plane downstream of said laser head outlet opening 10.

**.** According to an embodiment, said machine 1 comprises at least one camera configured to display the position of said beam 4 on said projection plane in a plurality of angular positions of said galvanometric head 5.

**.** According to an embodiment, said machine 1 comprises a processing and control unit in data connection with said camera and in data connection with said optical axis alignment means 17.

**.** According to an embodiment, said processing and control unit is in connection with a memory unit.

**.** According to an embodiment, said processing and control unit is configured to store in said memory unit each position of said beam 4 on said projection plane displayed by said camera in each angular position of said plurality of angular positions of said galvanometric head 5.

**.** According to an embodiment, said processing and control unit is configured to activate said alignment means 17 in feedback so as to align said first portion of optical axis and said second portion of optical axis.

**.** According to an embodiment, said processing and control unit is configured to activate said alignment means 17 in feedback so that the position of said beam 4 on said projection plane coincides with a single reference position for each angular position of said plurality of angular positions of said galvanometric head 5.

**.** According to an embodiment, said plurality of angular positions of said galvanometric laser head comprises at least three angular positions of galvanometric laser head.

**.** According to an embodiment, at least two angular positions of said at least three angular positions of the galvanometric laser head are symmetrical with respect to the remaining angular position of the galvanometric head.

**.** According to an embodiment, said laser machine 1 comprises a mechanical coupling plate 27 configured to couple said galvanometric laser head 5 to said at least one first rotation joint 11.

**.** The present invention also relates to a laser machine and laser beam alignment detection tool assembly 28.

**.** Said assembly 28 comprises a laser machine 1 as described above and a laser beam alignment detection tool 29.

**.** The present invention also relates to a laser beam alignment detection tool 29.

**.** The tool 29 comprises a tool target surface 30 configured to detect the position of the laser beam 4 projected downstream of said galvanometric laser head outlet opening 10 for each angular position of said galvanometric laser head 5.

**.** According to an embodiment, said tool target surface 30 is interchangeable.

**.** According to an embodiment, said tool target surface 30 is photosensitive and/or photodetecting.

**.** According to the present invention, said detection tool 29 can be coupled to said galvanometric laser head 5 by tool coupling means 31 so that said tool 29 rotates integrally with said galvanometric laser head 5.

**.** According to the present invention, said tool 29 can be coupled to said mechanical coupling plate 27 by tool coupling means 31 so that said tool 29 rotates integrally with said galvanometric laser head 5.

**.** According to an embodiment, said detection tool 29 comprises tool translational movement means 32 configured to move said target surface 30 close to and far from said head outlet opening 10. In this way, it is possible to adjust the distance between the target surface 30 and the focus lens 26 according to the focal distance of the focus lens 26 used.

**.** According to an embodiment, said target surface 30 is flat and is parallel to said focus lens 26.

**.** According to the present invention, said tool comprises a stem 33 coupled to said laser head 5 or to said mechanical coupling plate 27 by said coupling means 31.

**.** According to an embodiment, said tool 29 comprises a target surface support frame 34 configured to removably support said target surface 30.

**.** According to an embodiment, said target surface 30 is connected in a translatable manner to said stem 33 by said tool translational movement means 32.

**.** The present invention also relates to a method for aligning and calibrating a laser machine which comprises the following steps:
- providing a laser machine according to one of the embodiments described above and comprising optical axis alignment means 17 configured to move said laser beam along at least one beam translation axis and/or about at least one beam rotation axis,
- positioning a laser beam detection surface below said laser head outlet opening 10, wherein said laser beam detection surface is integral with the galvanometric laser head 5,
- emitting a laser beam 4 from said emission terminal 3, wherein said emission terminal 3 is positioned upstream of said numerical control rotation joint 11,
- actuating said numerical control rotation joint 11 so as to position said galvanometric laser head 5 with respect to said first laser machine rotation axis B in sequence in a first angular position Theta, a second angular position Theta + and a third angular position Theta -,
- detecting and storing the position of the beam in said first angular position Theta,
- detecting the position of the beam in said second angular position Theta + and in said third angular position theta -;
- actuating said optical axis alignment means 17 so as to move said laser beam 4 in a translational and/or rotational manner to vary the orientation of a portion of said optical axis OA which extends between said emission terminal 3 and said galvanometric scanner 7 so that the position of the beam projected in said second angular position theta + and the position of the beam in said third angular position theta - overlap the position of the beam in said first stored position theta.

**.** According to an embodiment, said method comprises the further steps of:
- emitting a laser beam 4 from said emission terminal 3, wherein said emission terminal 3 is positioned upstream with respect to said second rotation joint 25 and to said first rotation joint 11, while keeping said laser head in a fixed angular position with respect to said first laser machine rotation axis B,
- actuating said second rotation joint 25 so as to position said galvanometric laser head 5 with respect to said second laser machine rotation axis C in sequence in at least a fourth angular position Alpha, a fifth angular position Alpha + and a sixth angular position Alpha -,
- detecting and storing the position of the beam in said fourth angular position Alpha,
- detecting the position of the beam in said fifth angular position Alpha + and in said sixth angular position Alpha -;
- moving said beam 4 in a translational and/or rotational manner to adjust the orientation of a portion of said optical axis OA which extends between said emission terminal 3 and said bounce mirror 7 so that the position of the beam projected in said fifth angular position Alpha + and the position of the beam in said sixth angular position Alpha - overlap the position of the beam in said fourth stored position Alpha.

**.** According to an embodiment, said second angular position and said third angular position correspond at least to a variation of -+ 30 degrees with respect to said first angular position.

**.** As shown in Figures 11A-11C, a misalignment is visible between the beam projected in the form of a line by said galvanometric scanner in the three different angular positions of the head theta, theta -, theta + or alpha, alpha -, alpha +.

**.** In Figures 11A-11C, it is shown that the beam projected in the first angular position of the laser head is taken as a reference and is projected on the target surface with a dotted line and stored, and following the adjustment of the orientation of the emission terminal, the line projected in the second and third angular position of the head coincide with the reference dotted line. Therefore, in this way the optical axis of the laser machine is aligned, and the beam projection is independent of the rotation of the laser head.

**.** The present laser machine 1 therefore has a rotating galvanometric laser head 5 having a reduced number of components and consequently having a reduced bulk.

**.** Moreover, by virtue of the provision of optical axis alignment means, the laser machine 1 according to the present invention is easy and quick to calibrate.

### REFERENCE LIST

- 1: Material-removing laser machine
- 2: Laser emitter
- 3: Emission terminal
- 4: Laser beam
- 5: Galvanometric laser head
- 6: Laser head frame
- 7: Galvanometric scanner
- 8a: First galvanometric mirror
- 8b: Second galvanometric mirror
- 9: Laser head inlet opening
- 10: Laser head outlet opening
- 11: First rotation joint
- 12: First joint stator
- 13: First joint rotor
- 13a: Low speed shaft portion
- 13b: Multiplied speed shaft portion
- 14: First joint inlet opening
- 15: First joint outlet opening
- 16: First joint through cavity
- 17: Optical axis alignment means
- 18: Translational adjustment system
- 19: Angular adjustment system
- 20: Planar translational support
- 21: Bounce mirror
- 22: Operating unit
- 23: First operating unit part
- 24: Second operating unit part
- 25: Second rotation joint
- 26: Focus lens
- 27: Mechanical coupling plate
- 28: Laser machine and laser beam alignment detection tool assembly
- 29: Laser beam alignment detection tool
- 30: Tool target surface
- 31: Tool coupling means
- 32: Translational tool movement means
- 33: Stem
- 34: Target surface support frame
- 35: Laser machine frame
- 36: Drive means
- 37: First translational guide
- 38: Second translational guide
- 39: Support portion
- 40: First angular ring nut
- 41: Second angular ring nut
- OA: Optical beam axis
- E: First galvanometric mirror axis
- F: Second galvanometric mirror axis
- B: First laser machine rotation axis
- C: Second laser machine rotation axis
- X: First laser machine translation axis
- Y: Second laser machine translation axis
- Z: Third laser machine translation axis
- J: First beam translation axis
- K: Second beam translation axis
- I: First beam rotation axis
- L: Second beam rotation axis

## Claims

1. A laser machine (1) for material removal of the laser engraving CNC machine type, comprising:
- at least one movement axis (X, Y, Z) controlled by a numerical control unit;
- at least one emission terminal (3) associated with a laser emitter (2), wherein said emission terminal (3) is adapted to emit a laser beam (4), and wherein said emission terminal (3) defines an optical beam axis (OA) along which said laser beam (4) is propagated;
- an operating unit (22) having an operating unit housing (37), wherein said at least one emission terminal (3) is accommodated in said operating unit housing (37);
- a galvanometric laser head (5) comprising a laser head frame (6) and at least one galvanometric scanner (7) restrained to said laser head frame (6), wherein said galvanometric scanner (7) comprises a first galvanometric mirror (8a) and a second galvanometric mirror (8b), wherein the first galvanometric mirror (8a) and the second galvanometric mirror (8b) can respectively oscillate about a first galvanometric mirror axis (E) and a second galvanometric mirror axis (F), wherein said laser head frame (6) has a laser head inlet opening (9) and a laser head outlet opening (10);
- at least a first rotation joint (11), wherein said at least a first rotation joint (11) is a numerical control rotation joint and defines a first laser machine rotation axis (B), wherein said at least a first rotation joint (11) is configured to rotate said galvanometric head (5) about said first laser machine rotation axis (B) at least between a first angular head position and a second angular head position;
wherein said optical beam axis (OA) extends from said emission terminal (3) to at least said laser head outlet opening (10) and wherein said at least a first rotation joint (11) is arranged along said optical beam axis (OA) downstream of said emission terminal (3) so as to rotate said at least one galvanometric scanner (7) with respect to said emission terminal (3) about said first laser machine rotation axis (B),
wherein said optical beam axis (OA) comprises a first portion of optical beam axis and a second portion of optical beam axis; wherein said first portion of optical beam axis extends between said emission terminal (3) and said galvanometric scanner (7), and wherein said second portion of optical beam axis extends between said galvanometric scanner (7) and at least said galvanometric head outlet opening (10);
**characterized in that** said laser machine (1) comprises optical axis alignment means (17) configured to align said first portion of optical beam axis with said second portion of optical beam axis so that said first portion of optical beam axis is aligned with said second portion of optical beam axis for each angular position of said galvanometric laser head (5),
wherein said optical axis alignment means (17) comprise at least one translational adjustment system (18) configured to translate said optical axis (OA) with respect to at least a first beam translation axis (J) and at least a second beam translation axis (K), wherein said first beam translation axis (J) is transverse and/or incident to said optical axis (OA) and wherein said second beam translation axis (K) is transverse and/or incident to said optical axis (OA),
and wherein said optical axis alignment means (17) comprise an angular adjustment system (19), wherein said angular adjustment system (19) is configured to rotate said optical axis (OA) with respect to at least a first beam rotation axis (I), wherein said first beam rotation axis (I) is transverse and/or incident to said optical axis (OA).

2. A laser machine (1) according to claim 1,
wherein said galvanometric laser head (5) comprises exclusively a focus lens (26) avoiding supporting Z-shift dynamic focusing systems, wherein said focus lens (26) is fixed to said laser head frame (6) at said laser head outlet opening (10).

3. A laser machine (1) according to claim 1, wherein
- said at least a first rotation joint (11) is arranged along said optical beam axis (OA) between said emission terminal (3) and said galvanometric laser head (5);
and/or wherein said at least a first rotation joint (11) is connected to said operating unit (22) and said galvanometric laser head (5), wherein said at least a first rotation joint (11) supports said galvanometric laser head (5) so as to rotate said galvanometric laser head (5) with respect to said laser operating unit (22).

4. A laser machine (1) according to claim 1, wherein said translational adjustment system (18) comprises at least one planar translational support (20) configured to translate said emission terminal (3) along said first beam translation axis (J) and along said second beam translation axis (K), wherein said first beam translation axis (J) and said second beam translation axis (K) belong to a plane which is transverse and incident to said optical beam axis (OA),
and/or wherein said second beam translation axis (K) is transverse and/or incident to said first beam translation axis (J).

5. A laser machine (1) according to claim 1, wherein said translational adjustment system (18) comprises a first translational guide (37) translatable along the first beam translation axis (J) and a second translational guide (38) translatable along the second beam translation axis (K), wherein the second translational guide (38) has a support portion (39) on which the emission terminal (3) is restrained.

6. A laser machine (1) according to the preceding claim,
wherein said support portion (39) comprises said angular adjustment system (19) configured to rotate said optical axis (OA) with respect to at least said first beam rotation axis (I), wherein said angular adjustment system (19) is configured to rotate said emission terminal (3) with respect to at least said first beam rotation axis (I), wherein said angular adjustment system (19) comprises a first angular ring nut (40) configured to rotate said emission terminal (3) with respect to the first beam rotation axis (I), wherein said first beam rotation axis (I) is transverse and/or incident with respect to said second beam translation axis (K),
and/or wherein said first translational guide (37) supports said second translational guide (38);
and/or wherein said angular adjustment system (19) is configured to rotate said emission terminal (3) with respect to at least a second beam rotation axis (L), wherein said angular adjustment system (19) comprises a second angular ring nut (41) configured to rotate said emission terminal (3) with respect to the second beam rotation axis (L), wherein said second beam rotation axis (L) is transverse and/or incident with respect to said first beam translation axis (J),
wherein said first translational guide (37) comprises said second angular ring nut (41) so as to rotate said second translational guide (38) about said second beam rotation axis (L).

7. A laser machine (1) according to claim 1, wherein said angular adjustment system (19) comprises at least one bounce mirror (21) arranged between said emission terminal (3) and said galvanometric laser head (5) so as to reflect said laser beam (4) in direction of said galvanometric laser head (5), wherein said angular adjustment system (19) comprises adjustment means configured to adjust the inclination of said bounce mirror (21) with respect to said first beam rotation axis (I) and to a second beam rotation axis (L), wherein said first beam rotation axis (I) and said second beam rotation axis (L) belong to a plane which is transverse and/or incident to said optical beam axis (OA), wherein said bounce mirror (21) is arranged to be tiltable between a rest position and at least one adjustment position.

8. A laser machine (1) according to claim 1, comprising at least a second rotation joint (25), wherein said second rotation joint (25) is a numerical control rotation joint and defines a second laser machine rotation axis (C), wherein said second laser machine rotation axis (C) is perpendicular to said first laser machine rotation axis (B),
wherein said operating unit (22) comprises at least a first operating unit part (23) and a second operating unit part (24),
wherein said at least a second numerical control rotation joint (25) is configured to rotate said second operating unit part (24) with respect to said first operating unit part (23) about said second laser machine rotation axis (C) at least between a first angular position of first operating unit part and a second angular position of first operating unit part;
wherein said at least a first numerical control joint (11) is connected to said galvanometric laser head (5) and to said second operating unit portion (24) so as to rotate said galvanometric head (5) with respect to said second operating unit portion (24) about said first laser machine rotation axis (B) at least between said first angular head position and said second angular head position;
wherein said at least a second numerical control rotation joint (25) is arranged downstream of said emission terminal (3) and upstream of said at least a first numerical control rotation joint (11).

9. A laser machine (1) according to claims 7 and 8 and according to claim 4, wherein said emission terminal (3) is accommodated in said first operating unit part (23) and is movably supported by said planar translational support (20),
wherein said bounce mirror (21) is accommodated in said second operating unit part (24) so as to reflect said laser beam (4) in direction of said galvanometric laser head (5),
wherein said optical beam axis (OA) comprises a third portion of optical beam axis and a fourth portion of optical beam axis; wherein said third portion of optical beam axis extends between said emission terminal (3) and said bounce mirror (21), and wherein said fourth portion of optical beam axis extends between said bounce mirror (21) and at least said galvanometric head outlet opening (10) ;
wherein said optical axis alignment means (17) are configured to align said third portion of optical beam axis with said fourth portion of optical beam axis so that said third portion of optical beam axis is aligned with said fourth portion of optical beam axis for each angular position of said second operating unit part (24) with respect to said second laser machine rotation axis (C) when said galvanometric laser head (5) is in a fixed angular position with respect to said first laser machine rotation axis (B),
and wherein said beam adjustment means (17) are configured to align said first portion of optical beam axis with said second portion of optical beam axis so that said first portion of optical beam axis is aligned with said second portion of optical beam axis for each angular position of said galvanometric laser head (5) with respect to said first laser machine rotation axis (B) when said second operating unit part is in a fixed angular position with respect to said second laser machine rotation axis (C).

10. A laser machine (1) according to any one of the preceding claims, wherein said at least a first rotation joint (11) comprises a first joint stator (12) and a first joint rotor (13); wherein said first joint stator (12) and said first joint rotor (13) are coaxial;
wherein said first joint stator (12) is connected to said operating unit (22) and wherein said first joint rotor (13) is fastened to said galvanometric laser head (5), wherein said first joint rotor (13) is rotatable with respect to said stator (12) about said first laser machine rotation axis (B);
wherein said laser machine comprises drive means for rotating said numerical control rotor joint.

11. A laser machine (1) according to the preceding claim, wherein said first joint rotor (13) comprises a low speed shaft portion (13a) and a multiplied speed shaft portion (13b), wherein said joint stator (12) is interposed between said low speed shaft portion (13a) and said multiplied speed shaft portion (13b), wherein said drive means are connected to said low speed shaft portion (13a), and said multiplied speed shaft portion (13b) is connected to said low speed shaft portion (13a), wherein said multiplied speed shaft portion (13b) is fastened to said galvanometric laser head (5);
and/or wherein said at least a first rotation joint (11) has a first joint through cavity (16) which extends along said first machine rotation axis (B) between a first joint inlet opening (14) and a first joint outlet opening (15); wherein said first joint outlet opening (15) faces said laser head inlet opening (9);
and/or wherein said at least a second rotation joint (25) is mechanically similar to said at least a first rotation joint (11).

12. A laser machine (1) according to any one of the preceding claims, wherein said laser machine (1) is a multi-axis laser machine; and/or wherein said laser machine (1) is a machine with at least 4 axes; and/or wherein said machine rotation axis (B) is a horizontal axis; and/or wherein said emission terminal (3) is an optical fiber terminal of a fiber laser emitter; and/or wherein said galvanometric scanner (7) is aligned and centered with respect to said laser head inlet opening (9) and to said laser head outlet opening (10), and wherein said first portion of optical beam axis is aligned and centered with respect to said first galvanometric mirror (8a) in each angular position of said galvanometric laser head (5); and/or wherein said laser machine (1) comprises a mechanical coupling plate (27) configured to couple said galvanometric laser head (5) to said at least a first rotation joint (11) and/or wherein said laser beam (4) is an impulse laser beam, and/or wherein said beam (4) is projected on a projection plane downstream of said laser head outlet opening (10), wherein said machine (1) comprises at least one camera configured to display the position of said beam (4) on said projection plane in a plurality of angular positions of said galvanometric head (5) and wherein said machine (1) comprises a processing and control unit in data connection with said camera and in data connection with said alignment means, wherein said processing and control unit is configured to activate said alignment means (16) in feedback so as to align said first portion of optical axis and said second portion of optical axis.

13. A laser machine and laser beam alignment detection tool assembly (28), being **characterised by** the following:
- a laser machine (1) according to any one of claims 1 to 12, and
- a laser beam alignment detection tool (29), wherein said tool (29) comprises a tool target surface (30) configured to detect the position of the laser beam (4) projected downstream of said laser head outlet opening (10) for each angular position of said galvanometric laser head (5), wherein said detection tool (29) is integral with said galvanometric laser head (5) in each angular position of said galvanometric laser head (5).

14. An assembly (28) according to the preceding claim, wherein said detection tool (29) can be coupled to said galvanometric laser head (5) by tool coupling means (31) so that said tool (29) rotates integrally with said galvanometric laser head (5), and/or wherein said detection tool (25) comprises tool translational movement means (32) configured to move said target surface (30) close to and far from said head outlet opening (10); and/or wherein said target surface (30) is flat and is parallel to said focus lens (26); and/or wherein said tool comprises a stem (33) coupled to said laser head (5) by said coupling means (31) and wherein said target surface (30) is connected in a translatable manner to said stem (33) by said translational movement means (32),
and/or wherein said tool (29) comprises a target surface frame (34) configured to removably support said target surface.

15. A method for aligning and calibrating a laser machine, being **characterised by** comprising the following steps:
- providing a laser machine according to any one of claims 1 to 12,
- positioning a laser beam detection surface below said laser head outlet opening (10), wherein said laser beam detection surface is integral with the galvanometric laser head (5),
- emitting a laser beam (4) from said emission terminal (3), wherein said emission terminal (3) is positioned upstream with respect to said first numerical control rotation joint (11),
- actuating said first numerical control rotation joint (11) so as to position said galvanometric laser head (5) with respect to said first laser machine rotation axis (B) in sequence in a first angular position (Theta), a second angular position (Theta +) and a third angular position (Theta -),
- detecting and storing the position of the beam in said first angular position (Theta),
- detecting the position of the beam in said second angular position (Theta +) and in said third angular position (theta -);
- actuating said optical axis alignment means (17) so as to move said laser beam (4) in a translational and/or rotational manner to adjust the orientation of a portion of said optical axis (OA) which extends between said emission terminal (3) and said galvanometric scanner (7) so that the position of the beam projected in said second angular position (theta +) and the position of the beam in said third angular position (theta -) overlap the position of the beam in said first stored position (theta).

16. A method according to the preceding claim, wherein said laser machine (1) comprises a second rotation joint (25) and a bounce mirror (21), wherein said second rotation joint (25) is arranged upstream of said first rotation joint (11) and downstream of said emission terminal (3) along said optical beam axis (OA),
said method comprises the further steps of:
- emitting a laser beam (4) from said emission terminal (3), wherein said emission terminal (3) is positioned upstream with respect to said second rotation joint (25) and to said first rotation joint (11), while keeping said laser head in a fixed angular position with respect to said first laser machine rotation axis (B),
- actuating said second rotation joint (25) so as to position said galvanometric laser head (5) with respect to said second laser machine rotation axis (C) in sequence in at least a fourth angular position (Alpha), a fifth angular position (Alpha +) and a sixth angular position (Alpha -),
- detecting and storing the position of the beam in said fourth angular position (Alpha),
- detecting the position of the beam in said fifth angular position (Alpha +) and in said sixth angular position (Alpha -);
- moving said beam (4) in a translational and/or rotational manner to adjust the orientation of a portion of said optical axis (OA) which extends between said emission terminal (3) and said bounce mirror (7) so that the position of the beam projected in said fifth angular position (Alpha +) and the position of the beam in said sixth angular position (Alpha -) overlap the position of the beam in said fourth stored position (Alpha).

17. A laser beam alignment detection tool (29) for a laser machine (1) comprising a laser emission terminal (3) adapted to emit a laser beam (4), at least one rotational joint (11) and a galvanometric laser head (5) having a galvanometric laser head output opening (10), wherein said laser emission terminal (3) is arranged downstream of said at least one rotational joint (11) to which said galvanometric laser head (5) is connected,
said laser beam alignment detection tool (29) comprises a tool target surface (30) configured to detect the position of the laser beam (4) projected downstream of said laser head outlet opening (10) for each angular position of said galvanometric laser head (5),
**characterized in that** said detection tool (29) comprises tool coupling means (31) configured to integrally connect said laser beam alignment detection tool (29) with said galvanometric laser head (5) so that said tool (29) rotates integrally with said galvanometric laser head (5) in each angular position of said galvanometric laser head (5),
and **in that** said detection tool (29) comprises a stem (33), wherein said stem (33) comprises said coupling means (31) to couple said detection tool (29) to said laser head (5),
wherein said target surface (30) is connected in a translatable manner to said stem (33) by translational movement means (32), wherein said translational movement means (32) are configured to move said target surface (30) close to and far from said head outlet opening (10).

18. A laser beam alignment detection tool (29) according to claim 17, wherein said tool (29) comprises a target surface frame (34) configured to removably support said target surface, and/or wherein said tool target surface (30) is photosensitive and/or photodetecting, and/or wherein said tool target surface (30) is interchangeable.

## Patentansprüche

1. Lasermaschine (1) zur Materialentfernung vom CNC-Lasergravurmaschinentyp, umfassend:
- mindestens eine Bewegungsachse (X, Y, Z), die von einer numerischen Steuereinheit gesteuert wird;
- mindestens einen Emissionsanschluss (3), der mit einem Laseremitter (2) verbunden ist, wobei der Emissionsanschluss (3) dazu geeignet ist, einen Laserstrahl (4) zu emittieren, und wobei der Emissionsanschluss (3) eine optische Strahlachse (OA) definiert, entlang der sich der Laserstrahl (4) ausbreitet;
- eine Betriebseinheit (22), die ein Betriebseinheitsgehäuse (37) aufweist, wobei der mindestens eine Emissionsanschluss (3) in dem Betriebseinheitsgehäuse (37) untergebracht ist;
- einen galvanometrischen Laserkopf (5), der einen Laserkopfrahmen (6) und mindestens einen galvanometrischen Scanner (7) umfasst, der an dem Laserkopfrahmen (6) befestigt ist, wobei der galvanometrische Scanner (7) einen ersten galvanometrischen Spiegel (8a) und einen zweiten galvanometrischen Spiegel (8b) umfasst, wobei der erste galvanometrische Spiegel (8a) und der zweite galvanometrische Spiegel (8b) jeweils um eine erste galvanometrische Spiegelachse (E) und eine zweite galvanometrische Spiegelachse (F) schwingen können, wobei der Laserkopfrahmen (6) eine Laserkopfeinlassöffnung (9) und eine Laserkopfauslassöffnung (10) aufweist;
- mindestens ein erstes Drehgelenk (11), wobei das mindestens eine erste Drehgelenk (11) ein numerisch gesteuertes Drehgelenk ist und eine erste Lasermaschinendrehachse (B) definiert, wobei das mindestens eine erste Drehgelenk (11) dazu ausgelegt ist, den galvanometrischen Kopf (5) um die erste Lasermaschinendrehachse (B) mindestens zwischen einer ersten Kopfwinkelposition und einer zweiten Kopfwinkelposition zu drehen;
wobei sich die optische Strahlachse (OA) von dem Emissionsanschluss (3) zu mindestens der Laserkopfauslassöffnung (10) erstreckt und
wobei das mindestens eine erste Drehgelenk (11) entlang der optischen Strahlachse (OA) stromabwärts des Emissionsanschlusses (3) angeordnet ist, um den mindestens einen galvanometrischen Scanner (7) in Bezug auf den Emissionsanschluss (3) um die erste Lasermaschinendrehachse (B) zu drehen,
wobei die optische Strahlachse (OA) einen ersten Abschnitt der optischen Strahlachse und einen zweiten Abschnitt der optischen Strahlachse umfasst;
wobei sich der erste Abschnitt der optischen Strahlachse zwischen dem Emissionsanschluss (3) und dem galvanometrischen Scanner (7) erstreckt und
wobei sich der zweite Abschnitt der optischen Strahlachse zwischen dem galvanometrischen Scanner (7) und mindestens der galvanometrischen Kopfauslassöffnung (10) erstreckt;
**dadurch gekennzeichnet, dass** die Lasermaschine (1) Mittel zur Ausrichtung der optischen Achse (17) umfasst, die dazu ausgelegt sind, den ersten Abschnitt der optischen Strahlachse am zweiten Abschnitt der optischen Strahlachse auszurichten, so dass der erste Abschnitt der optischen Strahlachse am zweiten Abschnitt der optischen Strahlachse für jede Winkelposition des galvanometrischen Laserkopfes (5) ausgerichtet ist,
wobei die Mittel zur Ausrichtung der optischen Achse (17) mindestens ein Verschiebungseinstellsystem (18) umfassen, das dazu ausgelegt ist, die optische Achse (OA) in Bezug auf mindestens eine erste Strahlverschiebungsachse (J) und mindestens eine zweite Strahlverschiebungsachse (K) zu verschieben, wobei die erste Strahlverschiebungsachse (J) quer zur optischen Achse (OA) verläuft und/oder auf diese einfällt und wobei die zweite Strahlverschiebungsachse (K) quer zur optischen Achse (OA) verläuft und/oder auf diese einfällt
und wobei die Mittel zur Ausrichtung der optischen Achse (17) ein Winkeleinstellsystem (19) umfassen, wobei das Winkeleinstellsystem (19) dazu ausgelegt ist, die optische Achse (OA) in Bezug auf mindestens eine erste Strahldrehachse (I) zu drehen, wobei die erste Strahldrehachse (I) quer zur optischen Achse (OA) verläuft und/oder auf diese einfällt.

2. Lasermaschine (1) nach Anspruch 1,
wobei der galvanometrische Laserkopf (5) ausschließlich eine Fokuslinse (26) umfasst, die die Unterstützung von dynamischen Z-Fokusverschiebungssystemen vermeidet, wobei die Fokuslinse (26) an dem Laserkopfrahmen (6) an der Laserkopfauslassöffnung (10) angebracht ist.

3. Lasermaschine (1) nach Anspruch 1, wobei
- das mindestens eine erste Drehgelenk (11) entlang der optischen Strahlachse (OA) zwischen dem Emissionsanschluss (3) und dem galvanometrischen Laserkopf (5) angeordnet ist;
und/oder wobei das mindestens eine erste Drehgelenk (11) mit der Betriebseinheit (22) und dem galvanometrischen Laserkopf (5) verbunden ist, wobei das mindestens eine erste Drehgelenk (11) den galvanometrischen Laserkopf (5) trägt, um den galvanometrischen Laserkopf (5) in Bezug auf die Laserbetriebseinheit (22) zu drehen.

4. Lasermaschine (1) nach Anspruch 1, wobei das Verschiebungseinstellsystem (18) mindestens einen planaren Verschiebungsträger (20) umfasst, der dazu ausgelegt ist, den Emissionsanschluss (3) entlang der ersten Strahlverschiebungsachse (J) und entlang der zweiten Strahlverschiebungsachse (K) zu verschieben, wobei die erste Strahlverschiebungsachse (J) und die zweite Strahlverschiebungsachse (K) zu einer Ebene gehören, die quer zur optischen Strahlachse (OA) verläuft und auf diese einfällt,
und/oder wobei die zweite Strahlverschiebungsachse (K) quer zur ersten Strahlverschiebungsachse (J) verläuft und/oder auf diese einfällt.

5. Lasermaschine (1) nach Anspruch 1, wobei das Verschiebungseinstellsystem (18) eine erste Verschiebungsführung (37), die entlang der ersten Strahlverschiebungsachse (J) verschiebbar ist, und eine zweite Verschiebungsführung (38), die entlang der zweiten Strahlverschiebungsachse (K) verschiebbar ist, umfasst, wobei die zweite Verschiebungsführung (38) einen Trägerabschnitt (39) aufweist, an dem der Emissionsanschluss (3) befestigt ist.

6. Lasermaschine (1) nach dem vorhergehenden Anspruch,
wobei der Trägerabschnitt (39) das Winkeleinstellsystem (19) umfasst, das dazu ausgelegt ist, die optische Achse (OA) in Bezug auf mindestens die erste Strahldrehachse (I) zu drehen, wobei das Winkeleinstellsystem (19) dazu ausgelegt ist, den Emissionsanschluss (3) in Bezug auf mindestens die erste Strahldrehachse (I) zu drehen, wobei das Winkeleinstellsystem (19) eine erste Winkelringmutter (40) umfasst, die dazu ausgelegt ist, den Emissionsanschluss (3) in Bezug auf die erste Strahldrehachse (I) zu drehen, wobei die erste Strahldrehachse (I) in Bezug auf die zweite Strahlverschiebungsachse (K) quer verläuft und/oder auf diese einfällt und/oder wobei die erste Verschiebungsführung (37) die zweite Verschiebungsführung (38) trägt;
und/oder wobei das Winkeleinstellsystem (19) dazu ausgelegt ist, den Emissionsanschluss (3) in Bezug auf mindestens eine zweite Strahldrehachse (L) zu drehen, wobei das Winkeleinstellsystem (19) eine zweite Winkelringmutter (41) umfasst, die dazu ausgelegt ist, den Emissionsanschluss (3) in Bezug auf die zweite Strahldrehachse (L) zu drehen, wobei die zweite Strahldrehachse (L) in Bezug auf die erste Strahlverschiebungsachse (J) quer verläuft und/oder auf diese einfällt,
wobei die erste Verschiebungsführung (37) die zweite Winkelringmutter (41) umfasst, um die zweite Verschiebungsführung (38) um die zweite Strahldrehachse (L) zu drehen.

7. Lasermaschine (1) nach Anspruch 1, wobei das Winkeleinstellsystem (19) mindestens einen Umlenkspiegel (21) umfasst, der zwischen dem Emissionsanschluss (3) und dem galvanometrischen Laserkopf (5) angeordnet ist, um den Laserstrahl (4) in Richtung des galvanometrischen Laserkopfes (5) zu reflektieren, wobei das Winkeleinstellsystem (19) Einstellmittel umfasst, die dazu ausgelegt sind, die Neigung des Umlenkspiegels (21) in Bezug auf die erste Strahldrehachse (I) und auf eine zweite Strahldrehachse (L) einzustellen, wobei die erste Strahldrehachse (I) und die zweite Strahldrehachse (L) zu einer Ebene gehören, die quer zur optischen Strahlachse (OA) verläuft und/oder auf diese einfällt, wobei der Umlenkspiegel (21) angeordnet ist, um zwischen einer Ruheposition und mindestens einer Einstellposition kippbar zu sein.

8. Lasermaschine (1) nach Anspruch 1, umfassend mindestens ein zweites Drehgelenk (25), wobei das zweite Drehgelenk (25) ein numerisch gesteuertes Drehgelenk ist und eine zweite Lasermaschinendrehachse (C) definiert, wobei die zweite Lasermaschinendrehachse (C) senkrecht zu der ersten Lasermaschinendrehachse (B) steht,
wobei die Betriebseinheit (22) mindestens ein erstes Betriebseinheitsteil (23) und ein zweites Betriebseinheitsteil (24) umfasst,
wobei das mindestens zweite numerisch gesteuerte Drehgelenk (25) dazu ausgelegt ist, das zweite Betriebseinheitsteil (24) in Bezug auf das erste Betriebseinheitsteil (23) um die zweite Lasermaschinendrehachse (C) mindestens zwischen einer ersten Winkelposition des ersten Betriebseinheitsteils und einer zweiten Winkelposition des ersten Betriebseinheitsteils zu drehen;
wobei das mindestens eine erste numerische gesteuerte Gelenk (11) mit dem galvanometrischen Laserkopf (5) und dem zweiten Betriebseinheitsabschnitt (24) verbunden ist, um den galvanometrischen Kopf (5) in Bezug auf den zweiten Betriebseinheitsabschnitt (24) um die erste Lasermaschinendrehachse (B) mindestens zwischen der ersten Kopfwinkelposition und der zweiten Kopfwinkelposition zu drehen;
wobei das mindestens eine zweite numerisch gesteuerte Drehgelenk (25) stromabwärts des Emissionsanschlusses (3) und stromaufwärts des mindestens einen ersten numerisch gesteuerten Drehgelenks (11) angeordnet ist.

9. Lasermaschine (1) nach den Ansprüchen 7 und 8 und nach Anspruch 4, wobei der Emissionsanschluss (3) in dem ersten Betriebseinheitsteil (23) untergebracht ist und von dem planaren Verschiebungsträger (20) beweglich getragen wird,
wobei der Umlenkspiegel (21) in dem zweiten Betriebseinheitsteil (24) untergebracht ist, um den Laserstrahl (4) in Richtung des galvanometrischen Laserkopfes (5) zu reflektieren,
wobei die optische Strahlachse (OA) einen dritten Abschnitt der optischen Strahlachse und einen vierten Abschnitt der optischen Strahlachse umfasst; wobei sich der dritte Abschnitt der optischen Strahlachse zwischen dem Emissionsanschluss (3) und dem Umlenkspiegel (21) erstreckt und wobei sich der vierte Abschnitt der optischen Strahlachse zwischen dem Umlenkspiegel (21) und mindestens der galvanometrischen Kopfauslassöffnung (10) erstreckt;
wobei die Mittel zur Ausrichtung der optischen Achse (17) dazu ausgelegt sind, den dritten Abschnitt der optischen Strahlachse am vierten Abschnitt der optischen Strahlachse auszurichten, so dass der dritte Abschnitt der optischen Strahlachse am vierten Abschnitt der optischen Strahlachse für jede Winkelposition des zweiten Betriebseinheitsteils (24) in Bezug auf die zweite Lasermaschinendrehachse (C) ausgerichtet ist, wenn sich der galvanometrische Laserkopf (5) in einer festen Winkelposition in Bezug auf die erste Lasermaschinendrehachse (B) befindet,
und wobei die Strahleinstellmittel (17) dazu ausgelegt sind, den ersten Abschnitt der optischen Strahlachse am zweiten Abschnitt der optischen Strahlachse auszurichten, so dass der erste Abschnitt der optischen Strahlachse am zweiten Abschnitt der optischen Strahlachse für jede Winkelposition des galvanometrischen Laserkopfes (5) in Bezug auf die erste Lasermaschinendrehachse (B) ausgerichtet ist, wenn sich der zweite Betriebseinheitsteil in einer festen Winkelposition in Bezug auf die zweite Lasermaschinendrehachse (C) befindet.

10. Lasermaschine (1) nach einem der vorhergehenden Ansprüche, wobei das mindestens eine erste Drehgelenk (11) einen ersten Gelenkstator (12) und einen ersten Gelenkrotor (13) umfasst; wobei der erste Gelenkstator (12) und der erste Gelenkrotor (13) koaxial sind; wobei der erste Gelenkstator (12) mit der Betriebseinheit (22) verbunden ist und wobei der erste Gelenkrotor (13) an dem galvanometrischen Laserkopf (5) angebracht ist, wobei der erste Gelenkrotor (13) in Bezug auf den Stator (12) um die erste Lasermaschinendrehachse (B) drehbar ist;
wobei die Lasermaschine Antriebsmittel zum Drehen des numerisch gesteuerten Rotorgelenks umfasst.

11. Lasermaschine (1) nach dem vorhergehenden Anspruch, wobei der erste Gelenkrotor (13) einen Niedergeschwindigkeits-Wellenabschnitt (13a) und einen Wellenabschnitt für multiplizierte Geschwindigkeit (13b) umfasst, wobei der Gelenkstator (12) zwischen dem Niedergeschwindigkeits-Wellenabschnitt (13a) und dem Wellenabschnitt für multiplizierte Geschwindigkeit (13b) angeordnet ist, wobei die Antriebsmittel mit dem Niedergeschwindigkeits-Wellenabschnitt (13a) verbunden sind und der Wellenabschnitt für multiplizierte Geschwindigkeit (13b) mit dem Niedergeschwindigkeits-Wellenabschnitt (13a) verbunden ist, wobei der Wellenabschnitt für multiplizierte Geschwindigkeit (13b) an dem galvanometrischen Laserkopf (5) angebracht ist;
und/oder wobei das mindestens eine erste Drehgelenk (11) einen ersten Gelenkdurchgangshohlraum (16) aufweist, der sich entlang der ersten Maschinendrehachse (B) zwischen einer ersten Gelenkeinlassöffnung (14) und einer ersten Gelenkauslassöffnung (15) erstreckt; wobei die erste Gelenkauslassöffnung (15) der Laserkopfeinlassöffnung (9) zugewandt ist;
und/oder wobei das mindestens eine zweite Drehgelenk (25) dem mindestens einen ersten Drehgelenk (11) mechanisch ähnlich ist.

12. Lasermaschine (1) nach einem der vorhergehenden Ansprüche, wobei die Lasermaschine (1) eine mehrachsige Lasermaschine ist und/oder wobei die Lasermaschine (1) eine Maschine mit mindestens 4 Achsen ist und/oder wobei die Maschinendrehachse (B) eine horizontale Achse ist und/oder wobei der Emissionsanschluss (3) ein optischer Faseranschluss eines Faserlaseremitters ist und/oder wobei der galvanometrische Scanner (7) in Bezug auf die Laserkopfeinlassöffnung (9) und die Laserkopfauslassöffnung (10) ausgerichtet und zentriert ist und wobei der erste Abschnitt der optischen Strahlachse in jeder Winkelposition des galvanometrischen Laserkopfes (5) in Bezug auf den ersten galvanometrischen Spiegel (8a) ausgerichtet und zentriert ist und/oder wobei die Lasermaschine (1) eine mechanische Kopplungsplatte (27) umfasst, die dazu ausgelegt ist, den galvanometrischen Laserkopf (5) mit dem mindestens einen ersten Drehgelenk (11) zu koppeln, und/oder wobei der Laserstrahl (4) ein Impulslaserstrahl ist und/oder wobei der Strahl (4) auf eine Projektionsebene stromabwärts der Laserkopfauslassöffnung (10) projiziert wird, wobei die Maschine (1) mindestens eine Kamera umfasst, die dazu ausgelegt ist, die Position des Strahls (4) auf der Projektionsebene in einer Vielzahl von Winkelpositionen des galvanometrischen Kopfes (5) anzuzeigen, und wobei die Maschine (1) eine Verarbeitungs- und Steuereinheit umfasst, die in Datenverbindung mit der Kamera und in Datenverbindung mit den Ausrichtungsmitteln steht, wobei die Verarbeitungs- und Steuereinheit dazu ausgelegt ist, die Ausrichtungsmittel (16) in Rückkopplung zu aktivieren, um den ersten Abschnitt der optischen Achse und den zweiten Abschnitt der optischen Achse auszurichten.

13. Lasermaschine und Laserstrahlausrichtungserkennungswerkzeuganordnung (28), die durch Folgendes gekennzeichnet sind:
- eine Lasermaschine (1) nach einem der Ansprüche 1 bis 12 und
- ein Laserstrahlausrichtungserkennungswerkzeug (29), wobei das Werkzeug (29) eine Werkzeugzielfläche (30) umfasst, die dazu ausgelegt ist, die Position des Laserstrahls (4), der stromabwärts der Laserkopfauslassöffnung (10) projiziert wird, für jede Winkelposition des galvanometrischen Laserkopfes (5) zu erkennen, wobei das Erkennungswerkzeug (29) in jeder Winkelposition des galvanometrischen Laserkopfes (5) mit dem galvanometrischen Laserkopf (5) integral ist.

14. Anordnung (28) nach dem vorhergehenden Anspruch, wobei das Erkennungswerkzeug (29) mit dem galvanometrischen Laserkopf (5) durch Werkzeugkopplungsmittel (31) gekoppelt sein kann, so dass sich das Werkzeug (29) integral mit dem galvanometrischen Laserkopf (5) dreht, und/oder wobei das Erkennungswerkzeug (25) Werkzeugverschiebungsbewegungsmittel (32) umfasst, die dazu ausgelegt sind, die Zielfläche (30) nahe an die Kopfauslassöffnung (10) heran und von dieser weg zu bewegen; und/oder wobei die Zielfläche (30) eben und parallel zu der Fokuslinse (26) ist und/oder wobei das Werkzeug einen Schaft (33) umfasst, der mit dem Laserkopf (5) durch die Kopplungsmittel (31) gekoppelt ist, und wobei die Zielfläche (30) in einer verschiebbaren Weise mit dem Schaft (33) durch die Verschiebungsbewegungsmittel (32) verbunden ist und/oder wobei das Werkzeug (29) einen Zielflächenrahmen (34) umfasst, der dazu ausgelegt ist, die Zielfläche abnehmbar zu tragen.

15. Verfahren zur Ausrichtung und Kalibrierung einer Lasermaschine, **dadurch gekennzeichnet, dass** es die folgenden Schritte umfasst:
- Bereitstellen einer Lasermaschine nach einem der Ansprüche 1 bis 12,
- Positionieren einer Laserstrahlerkennungsfläche unterhalb der Laserkopfauslassöffnung (10), wobei die Laserstrahlerkennungsfläche mit dem galvanometrischen Laserkopf (5) integral ist,
- Emittieren eines Laserstrahls (4) von dem Emissionsanschluss (3), wobei der Emissionsanschluss (3) in Bezug auf das erste numerisch gesteuerte Drehgelenk (11) stromaufwärts positioniert ist,
- Betätigen des ersten numerisch gesteuerten Drehgelenks (11), um den galvanometrischen Laserkopf (5) in Bezug auf die erste Lasermaschinendrehachse (B) nacheinander in einer ersten Winkelposition (Theta), einer zweiten Winkelposition (Theta +) und einer dritten Winkelposition (Theta -) zu positionieren,
- Erkennen und Speichern der Position des Strahls in der ersten Winkelposition (Theta),
- Erkennen der Position des Strahls in der zweiten Winkelposition (Theta +) und in der dritten Winkelposition (Theta -);
- Betätigen des Mittels zur Ausrichtung der optischen Achse (17), um den Laserstrahl (4) in einer verschiebbaren und/oder drehenden Weise zu bewegen, um die Orientierung eines Abschnitts der optischen Achse (OA), der sich zwischen dem Emissionsanschluss (3) und dem galvanometrischen Scanner (7) erstreckt, derart einzustellen, dass die Position des in der zweiten Winkelposition (Theta +) projizierten Strahls und die Position des Strahls in der dritten Winkelposition (Theta -) die Position des Strahls in der ersten gespeicherten Position (Theta) überlappen.

16. Verfahren nach dem vorhergehenden Anspruch, wobei die Lasermaschine (1) ein zweites Drehgelenk (25) und einen Umlenkspiegel (21) umfasst, wobei das zweite Drehgelenk (25) stromaufwärts des ersten Drehgelenks (11) und stromabwärts des Emissionsanschlusses (3) entlang der optischen Strahlachse (OA) angeordnet ist,
wobei das Verfahren die folgenden weiteren Schritte umfasst:
- Emittieren eines Laserstrahls (4) von dem Emissionsanschluss (3), wobei der Emissionsanschluss (3) stromaufwärts in Bezug auf das zweite Drehgelenk (25) und das erste Drehgelenk (11) positioniert ist, während der Laserkopf in einer festen Winkelposition in Bezug auf die erste Lasermaschinendrehachse (B) gehalten wird,
- Betätigen des zweiten Drehgelenks (25), um den galvanometrischen Laserkopf (5) in Bezug auf die zweite Lasermaschinendrehachse (C) nacheinander in mindestens einer vierten Winkelposition (Alpha), einer fünften Winkelposition (Alpha +) und einer sechsten Winkelposition (Alpha -) zu positionieren,
- Erkennen und Speichern der Position des Strahls in der vierten Winkelposition (Alpha),
- Erkennen der Position des Strahls in der fünften Winkelposition (Alpha+) und in der sechsten Winkelposition (Alpha -);
- Bewegen des Strahls (4) in einer verschiebbaren und/oder drehenden Weise, um die Orientierung eines Abschnitts der optischen Achse (OA), der sich zwischen dem Emissionsanschluss (3) und dem Umlenkspiegel (7) erstreckt, derart einzustellen, dass die Position des in der fünften Winkelposition (Alpha +) projizierten Strahls und die Position des Strahls in der sechsten Winkelposition (Alpha -) die Position des Strahls in der vierten gespeicherten Position (Alpha) überlappen.

17. Laserstrahlausrichtungserkennungswerkzeug (29) für eine Lasermaschine (1), umfassend einen Laseremissionsanschluss (3), der dazu geeignet ist, einen Laserstrahl (4) zu emittieren, mindestens ein Drehgelenk (11) und einen galvanometrischen Laserkopf (5), der eine galvanometrische Laserkopfauslassöffnung (10) aufweist, wobei der Laseremissionsanschluss (3) stromabwärts des mindestens einen Drehgelenks (11) angeordnet ist, mit dem der galvanometrische Laserkopf (5) verbunden ist,
wobei das Laserstrahlausrichtungserkennungswerkzeug (29) eine Werkzeugzielfläche (30) umfasst, die dazu ausgelegt ist, die Position des stromabwärts der Laserkopfauslassöffnung (10) projizierten Laserstrahls (4) für jede Winkelposition des galvanometrischen Laserkopfes (5) zu erkennen, **dadurch gekennzeichnet, dass** das Erkennungswerkzeug (29) Werkzeugkopplungsmittel (31) umfasst, die dazu ausgelegt sind, das Laserstrahlausrichtungserkennungswerkzeug (29) mit dem galvanometrischen Laserkopf (5) integral zu verbinden, so dass sich das Werkzeug (29) integral mit dem galvanometrischen Laserkopf (5) in jeder Winkelposition des galvanometrischen Laserkopfes (5) dreht,
und dass das Erkennungswerkzeug (29) einen Schaft (33) umfasst, wobei der Schaft (33) die Kopplungsmittel (31) umfasst, um das Erkennungswerkzeug (29) mit dem Laserkopf (5) zu koppeln,
wobei die Zielfläche (30) durch Verschiebungsbewegungsmittel (32) auf verschiebbare Weise mit dem Schaft (33) verbunden ist, wobei die Verschiebungsbewegungsmittel (32) dazu ausgelegt sind, die Zielfläche (30) nahe an die Kopfauslassöffnung (10) und von dieser weg zu bewegen.

18. Laserstrahlausrichtungserkennungswerkzeug (29) nach Anspruch 17, wobei das Werkzeug (29) einen Zielflächenrahmen (34) umfasst, der dazu ausgelegt ist, die Zielfläche abnehmbar zu tragen, und/oder wobei die Werkzeugzielfläche (30) lichtempfindlich und/oder lichterfassend ist und/oder wobei die Werkzeugzielfläche (30) austauschbar ist.

## Revendications

1. Machine laser (1) pour l'enlèvement de matière du type machine CNC de gravure laser, comprenant :
- au moins un axe de mouvement (X, Y, Z) commandé par une unité de commande numérique ;
- au moins un terminal d'émission (3) associé à un émetteur laser (2), dans laquelle ledit terminal d'émission (3) est adapté pour émettre un faisceau laser (4), et dans laquelle ledit terminal d'émission (3) définit un axe de faisceau optique (OA) le long duquel ledit faisceau laser (4) est propagé ;
- une unité de fonctionnement (22) présentant un boîtier d'unité de fonctionnement (37), dans laquelle ledit au moins un terminal d'émission (3) est logé dans ledit boîtier d'unité de fonctionnement (37) ;
- une tête laser galvanométrique (5) comprenant un cadre de tête laser (6) et au moins un scanner galvanométrique (7) retenu sur ledit cadre de tête laser (6), dans laquelle ledit scanner galvanométrique (7) comprend un premier miroir galvanométrique (8a) et un deuxième miroir galvanométrique (8b), dans laquelle le premier miroir galvanométrique (8a) et le deuxième miroir galvanométrique (8b) peuvent respectivement osciller autour d'un premier axe de miroir galvanométrique (E) et d'un deuxième axe de miroir galvanométrique (F), dans laquelle ledit cadre de tête laser (6) présente une ouverture d'entrée de tête laser (9) et une ouverture de sortie de tête laser (10) ;
- au moins un premier joint de rotation (11), dans laquelle ledit au moins un premier joint de rotation (11) est un premier joint de rotation à commande numérique et définit un premier axe de rotation de machine laser (B), dans laquelle ledit au moins un premier joint de rotation (11) est configuré pour faire tourner ladite tête galvanométrique (5) autour dudit premier axe de rotation de machine laser (B) au moins entre une première position de tête angulaire et une deuxième position de tête angulaire ;
dans laquelle ledit axe de faisceau optique (OA) s'étend dudit terminal d'émission (3) à au moins ladite ouverture de sortie de tête laser (10) et dans laquelle ledit au moins un premier joint de rotation (11) est disposé le long dudit axe de faisceau optique (OA) en aval dudit terminal d'émission (3) de manière à faire tourner ledit au moins un scanner galvanométrique (7) par rapport audit terminal d'émission (3) autour dudit premier axe de rotation de machine laser (B),
dans laquelle ledit axe de faisceau optique (OA) comprend une première partie d'axe de faisceau optique et une deuxième partie d'axe de faisceau optique ; dans laquelle ladite première partie d'axe de faisceau optique s'étend entre ledit terminal d'émission (3) et ledit scanner galvanométrique (7), et dans laquelle ladite deuxième partie d'axe de faisceau optique s'étend entre ledit scanner galvanométrique (7) et au moins ladite ouverture de sortie de tête galvanométrique (10) ;
**caractérisée en ce que** ladite machine laser (1) comprend des moyens d'alignement d'axe optique (17) configurés pour aligner ladite première partie d'axe de faisceau optique avec ladite deuxième partie d'axe de faisceau optique de sorte que ladite première partie d'axe de faisceau optique est alignée avec ladite deuxième partie d'axe de faisceau optique pour chaque position angulaire de ladite tête laser galvanométrique (5),
dans laquelle lesdits moyens d'alignement d'axe optique (17) comprennent au moins un système de réglage de translation (18) configuré pour translater ledit axe optique (OA) par rapport à au moins un premier axe de translation de faisceau (J) et au moins un deuxième axe de translation de faisceau (K), dans laquelle ledit premier axe de translation de faisceau (J) est transversal et/ou incident audit axe optique (OA) et dans laquelle ledit deuxième axe de translation de faisceau (K) est transversal et/ou incident audit axe optique (OA),
et dans laquelle lesdits moyens d'alignement d'axe optique (17) comprennent un système de réglage angulaire (19), dans laquelle ledit système de réglage angulaire (19) est configuré pour faire tourner ledit axe optique (OA) par rapport à au moins un premier axe de rotation de faisceau (I), dans laquelle ledit premier axe de rotation de faisceau (I) est transversal et/ou incident audit axe optique (OA).

2. Machine laser (1) selon la revendication 1,
dans laquelle ladite tête laser galvanométrique (5) comprend exclusivement une lentille de focalisation (26) évitant de supporter des systèmes de focalisation dynamique à déplacement en Z, dans laquelle ladite lentille de focalisation (26) est fixée audit cadre de tête laser (6) au niveau de ladite ouverture de sortie de tête laser (10).

3. Machine laser (1) selon la revendication 1, dans laquelle
- ledit au moins un premier joint de rotation (11) est disposé le long dudit axe de faisceau optique (OA) entre ledit terminal d'émission (3) et ladite tête laser galvanométrique (5) ;
et/ou dans laquelle ledit au moins un premier joint de rotation (11) est relié à ladite unité de fonctionnement (22) et à ladite tête laser galvanométrique (5), dans laquelle ledit au moins un premier joint de rotation (11) supporte ladite tête laser galvanométrique (5) de manière à faire tourner ladite tête laser galvanométrique (5) par rapport à ladite unité de fonctionnement laser (22).

4. Machine laser (1) selon la revendication 1, dans laquelle ledit système de réglage de translation (18) comprend au moins un support de translation plat (20) configuré pour translater ledit terminal d'émission (3) le long dudit premier axe de translation de faisceau (J) et le long dudit deuxième axe de translation de faisceau (K), dans laquelle ledit premier axe de translation de faisceau (J) et ledit deuxième axe de translation de faisceau (K) appartiennent à un plan qui est transversal et incident audit axe de faisceau optique (OA), et/ou dans laquelle ledit deuxième axe de translation de faisceau (K) est transversal et/ou incident audit premier axe de translation de faisceau (J).

5. Machine laser (1) selon la revendication 1, dans laquelle ledit système de réglage de translation (18) comprend une première glissière de translation (37) pouvant être translatée le long du premier axe de translation de faisceau (J) et une deuxième glissière de translation (38) pouvant être translatée le long du deuxième axe de translation de faisceau (K), dans laquelle la deuxième glissière de translation (38) comporte une partie de support (39) sur laquelle le terminal d'émission (3) est retenu.

6. Machine laser (1) selon la revendication précédente,
dans laquelle ladite partie de support (39) comprend ledit système de réglage angulaire (19) configuré pour faire tourner ledit axe optique (OA) par rapport à au moins ledit premier axe de rotation de faisceau (I), dans laquelle ledit système de réglage angulaire (19) est configuré pour faire tourner ledit terminal d'émission (3) par rapport à au moins ledit premier axe de rotation de faisceau (I), dans laquelle ledit système de réglage angulaire (19) comprend un premier écrou annulaire angulaire (40) configuré pour faire tourner ledit terminal d'émission (3) par rapport au premier axe de rotation de faisceau (I), dans laquelle ledit premier axe de rotation de faisceau (I) est transversal et/ou incident audit deuxième axe de translation de faisceau (K),
et/ou dans laquelle ladite première glissière de translation (37) supporte ladite deuxième glissière de translation (38) ;
et/ou dans laquelle ledit système de réglage angulaire (19) est configuré pour faire tourner ledit terminal d'émission (3) par rapport à au moins un deuxième axe de rotation de faisceau (L), dans laquelle ledit système de réglage angulaire (19) comprend un deuxième écrou annulaire angulaire (41) configuré pour faire tourner ledit terminal d'émission (3) par rapport au deuxième axe de rotation de faisceau (L), dans laquelle ledit deuxième axe de rotation de faisceau (L) est transversal et/ou incident audit premier axe de translation de faisceau (J),
dans laquelle ladite première glissière de translation (37) comprend ledit deuxième écrou annulaire angulaire (41) de manière à faire tourner ladite deuxième glissière de translation (38) autour dudit deuxième axe de rotation de faisceau (L).

7. Machine laser (1) selon la revendication 1, dans laquelle ledit système de réglage angulaire (19) comprend au moins un miroir de rebond (21) disposé entre ledit terminal d'émission (3) et ladite tête laser galvanométrique (5) de manière à réfléchir ledit faisceau laser (4) en direction de ladite tête laser galvanométrique (5), dans laquelle ledit système de réglage angulaire (19) comprend des moyens de réglage configurés pour régler l'inclinaison dudit miroir de rebond (21) par rapport audit premier axe de rotation de faisceau (I) et à un deuxième axe de rotation de faisceau (L), dans laquelle ledit premier axe de rotation de faisceau (I) et ledit deuxième axe de rotation de faisceau (L) appartiennent à un plan qui est transversal et/ou incident audit axe de faisceau optique (OA), dans laquelle ledit miroir de rebond (21) est disposé pour être inclinable entre une position de repos et au moins une position de réglage.

8. Machine laser (1) selon la revendication 1, comprenant au moins un deuxième joint de rotation (25), dans laquelle ledit deuxième joint de rotation (25) est un joint de rotation à commande numérique et définit un deuxième axe de rotation de machine laser (C), dans laquelle ledit deuxième axe de rotation de machine laser (C) est perpendiculaire audit premier axe de rotation de machine laser (B),
dans laquelle ladite unité de fonctionnement (22) comprend au moins une première partie d'unité de fonctionnement (23) et une deuxième partie d'unité de fonctionnement (24),
dans laquelle ledit au moins un joint de rotation à commande numérique (25) est configuré pour faire tourner ladite deuxième partie d'unité de fonctionnement (24) par rapport à ladite première partie d'unité de fonctionnement (23) autour dudit deuxième axe de rotation de machine laser (C) au moins entre une première position angulaire de la première partie d'unité de fonctionnement et une deuxième position angulaire de la première partie d'unité de fonctionnement ;
dans laquelle ledit au moins un premier joint à commande numérique (11) est relié à ladite tête laser galvanométrique (5) et à ladite deuxième partie d'unité de fonctionnement (24) de manière à faire tourner ladite tête galvanométrique (5) par rapport à ladite deuxième partie d'unité de fonctionnement (24) autour dudit premier axe de rotation de machine laser (B) au moins entre ladite première position de tête angulaire et ladite deuxième position de tête angulaire ;
dans laquelle ledit au moins un deuxième joint de rotation à commande numérique (25) est disposé en aval dudit terminal d'émission (3) et en amont dudit au moins un premier joint de rotation à commande numérique (11).

9. Machine laser (1) selon les revendications 7 et 8 et selon la revendication 4, dans laquelle ledit terminal d'émission (3) est logé dans ladite première partie d'unité de fonctionnement (23) et est supporté de manière mobile par ledit support de translation plat (20),
dans laquelle ledit miroir de rebond (21) est logé dans ladite deuxième partie d'unité de fonctionnement (24) de manière à réfléchir ledit faisceau laser (4) en direction de ladite tête laser galvanométrique (5),
dans laquelle ledit axe de faisceau optique (OA) comprend une troisième partie d'axe de faisceau optique et une quatrième partie d'axe de faisceau optique ; dans laquelle ladite troisième partie d'axe de faisceau optique s'étend entre ledit terminal d'émission (3) et ledit miroir de rebond (21), et dans laquelle ladite quatrième partie d'axe de faisceau optique s'étend entre ledit miroir de rebond (21) et au moins ladite ouverture de sortie de tête galvanométrique (10) ;
dans laquelle lesdits moyens d'alignement d'axe optique (17) sont configurés pour aligner ladite troisième partie d'axe de faisceau optique avec ladite quatrième partie d'axe de faisceau optique de sorte que ladite troisième partie d'axe de faisceau optique est alignée avec ladite quatrième partie d'axe de faisceau optique pour chaque position angulaire de ladite deuxième partie d'unité de fonctionnement (24) par rapport audit deuxième axe de rotation de la machine laser (C)
lorsque ladite tête laser galvanométrique (5) est dans une position angulaire fixe par rapport audit premier axe de rotation de machine laser (B), et dans laquelle lesdits moyens de réglage de faisceau (17) sont configurés pour aligner ladite première partie d'axe de faisceau optique avec ladite deuxième partie d'axe de faisceau optique de sorte que ladite première partie d'axe de faisceau optique est alignée avec ladite deuxième partie d'axe de faisceau optique pour chaque position angulaire de ladite tête laser galvanométrique (5) par rapport audit premier axe de rotation de machine laser (B) lorsque ladite deuxième partie d'unité de fonctionnement est dans une position angulaire fixe par rapport audit deuxième axe de rotation de la machine laser (C).

10. Machine laser (1) selon l'une quelconque des revendications précédentes, dans laquelle ledit au moins un premier joint de rotation (11) comprend un premier stator de joint (12) et un premier rotor de joint (13) ;
dans laquelle ledit premier stator de joint (12) et ledit premier rotor de joint (13) sont coaxiaux ; dans laquelle ledit premier stator de joint (12) est relié à ladite unité de fonctionnement (22) et dans laquelle ledit premier rotor de joint (13) est fixé à ladite tête laser galvanométrique (5), dans laquelle ledit premier rotor de joint (13) peut tourner par rapport audit stator (12) autour dudit premier axe de rotation de machine laser (B) ;
dans laquelle ladite machine laser comprend des moyens d'entraînement pour faire tourner ledit joint de rotor à commande numérique.

11. Machine laser (1) selon la revendication précédente, dans laquelle ledit premier rotor de joint (13) comprend une partie d'arbre à faible vitesse (13a) et une partie d'arbre à vitesse multipliée (13b), dans laquelle ledit stator de joint (12) est interposé entre ladite partie d'arbre à faible vitesse (13a) et ladite partie d'arbre à vitesse multipliée (13b), dans laquelle lesdits moyens d'entraînement sont reliés à ladite partie d'arbre à faible vitesse (13a), et ladite partie d'arbre à vitesse multipliée (13b) est reliée à ladite partie d'arbre à faible vitesse (13a), dans laquelle ladite partie d'arbre à vitesse multipliée (13b) est fixée à ladite tête laser galvanométrique (5) ;
et/ou dans laquelle ledit au moins un premier joint de rotation (11) présente une première cavité traversante de joint (16) qui s'étend le long dudit premier axe de rotation de machine (B) entre une première ouverture d'entrée de joint (14) et une première ouverture de sortie de joint (15) ; dans laquelle ladite première ouverture de sortie de joint (15) fait face à ladite ouverture d'entrée de tête laser (9) ;
et/ou dans laquelle ledit au moins un deuxième joint de rotation (25) est mécaniquement similaire audit au moins un premier joint de rotation (11).

12. Machine laser (1) selon l'une quelconque des revendications précédentes, dans laquelle ladite machine laser (1) est une machine laser multiaxes ; et/ou dans laquelle ladite machine laser (1) est une machine avec au moins 4 axes ; et/ou dans laquelle ledit axe de rotation de machine (B) est un axe horizontal ; et/ou dans laquelle ledit terminal d'émission (3) est un terminal de fibre optique d'un émetteur laser à fibre ; et/ou dans laquelle ledit scanner galvanométrique (7) est aligné et centré par rapport à ladite ouverture d'entrée de tête laser (9) et à ladite ouverture de sortie de tête laser (10), et dans laquelle ladite première partie d'axe de faisceau optique est alignée et centrée par rapport audit premier miroir galvanométrique (8a) dans chaque position angulaire de ladite tête laser galvanométrique (5) ; et/ou dans laquelle ladite machine laser (1) comprend une plaque de couplage mécanique (27) configurée pour coupler ladite tête laser galvanométrique (5) audit au moins un premier joint de rotation (11) et/ou dans laquelle ledit faisceau laser (4) est un faisceau laser à impulsions, et/ou dans laquelle ledit faisceau (4) est projeté sur un plan de projection en aval de ladite ouverture de sortie de tête laser (10), dans laquelle ladite machine (1) comprend au moins une caméra configurée pour afficher la position dudit faisceau (4) sur ledit plan de projection dans une pluralité de positions angulaires de ladite tête galvanométrique (5) et dans laquelle ladite machine (1) comprend une unité de traitement et de commande en connexion de données avec ladite caméra et en connexion de données avec lesdits moyens d'alignement, dans laquelle ladite unité de traitement et de commande est configurée pour activer lesdits moyens d'alignement (16) en rétroaction de manière à aligner ladite première partie d'axe optique et ladite deuxième partie d'axe optique.

13. Ensemble machine laser et outil de détection d'alignement de faisceau laser (28) étant **caractérisé par** ce qui suit :
- une machine laser (1) selon l'une quelconque des revendications 1 à 12, et
- un outil de détection d'alignement de faisceau laser (29), dans lequel ledit outil (29) comprend une surface cible d'outil (30) configurée pour détecter la position du faisceau laser (4) projeté en aval de ladite ouverture de sortie de tête laser (10) pour chaque position angulaire de ladite tête laser galvanométrique (5), dans lequel ledit outil de détection (29) est solidaire de ladite tête laser galvanométrique (5) dans chaque position angulaire de ladite tête laser galvanométrique (5).

14. Ensemble (28) selon la revendication précédente, dans lequel ledit outil de détection (29) peut être couplé à ladite tête laser galvanométrique (5) par des moyens de couplage d'outil (31) de sorte que ledit outil (29) tourne d'un seul tenant avec ladite tête laser galvanométrique (5), et/ou dans lequel ledit outil de détection (25) comprend des moyens de mouvement de translation d'outil (32) configurés pour déplacer ladite surface cible (30) à proximité et à distance de ladite ouverture de sortie de tête (10) ; et/ou dans lequel ladite surface cible (30) est plate et est parallèle à ladite lentille de focalisation (26) ; et/ou dans lequel ledit outil comprend une tige (33) couplée à ladite tête laser (5) par lesdits moyens de couplage (31) et dans lequel ladite surface cible (30) est reliée de manière translatable à ladite tige (33) par lesdits moyens de mouvement de translation (32),
et/ou dans lequel ledit outil (29) comprend un cadre de surface cible (34) configuré pour supporter de manière amovible ladite surface cible.

15. Procédé d'alignement et d'étalonnage d'une machine laser, **caractérisé en ce qu'**il comprend les étapes suivantes :
- fournir une machine laser selon l'une quelconque des revendications 1 à 12,
- positionner une surface de détection de faisceau laser sous ladite ouverture de sortie de tête laser (10), dans laquelle ladite surface de détection de faisceau laser est solidaire de la tête laser galvanométrique (5),
- émettre un faisceau laser (4) à partir dudit terminal d'émission (3), dans lequel ledit terminal d'émission (3) est positionné en amont par rapport audit premier joint de rotation à commande numérique (11),
- actionner ledit premier joint de rotation à commande numérique (11) de manière à positionner ladite tête laser galvanométrique (5) par rapport audit premier axe de rotation de machine laser (B) en séquence dans une première position angulaire (Theta), une deuxième position angulaire (Theta +) et une troisième position angulaire (Theta -),
- détecter et stocker la position du faisceau dans ladite première position angulaire (Theta),
- détecter la position du faisceau dans ladite deuxième position angulaire (Theta +) et dans ladite troisième position angulaire (theta -);
- actionner lesdits moyens d'alignement d'axe optique (17) de manière à déplacer ledit faisceau laser (4) d'une manière en translation et/ou en rotation pour régler l'orientation d'une partie dudit axe optique (OA) qui s'étend entre ledit terminal d'émission (3) et ledit scanner galvanométrique (7) de sorte que la position du faisceau projeté dans ladite deuxième position angulaire (theta +) et la position du faisceau dans ladite troisième position angulaire (theta -) chevauchent la position du faisceau dans ladite première position stockée (theta).

16. Procédé selon la revendication précédente, dans lequel ladite machine laser (1) comprend un deuxième joint de rotation (25) et un miroir de rebond (21), dans lequel ledit deuxième joint de rotation (25) est disposé en amont dudit premier joint de rotation (11) et en aval dudit terminal d'émission (3) le long dudit axe de faisceau optique (OA),
ledit procédé comprend les étapes supplémentaires consistant à :
- émettre un faisceau laser (4) à partir dudit terminal d'émission (3), dans lequel ledit terminal d'émission (3) est positionné en amont par rapport audit deuxième joint de rotation (25) et audit premier joint de rotation (11), tout en maintenant ladite tête laser dans une position angulaire fixe par rapport audit premier axe de rotation de machine laser (B),
- actionner ledit deuxième joint de rotation (25) de manière à positionner ladite tête laser galvanométrique (5) par rapport audit deuxième axe de rotation de la machine laser (C) en séquence dans au moins une quatrième position angulaire (Alpha), une cinquième position angulaire (Alpha +) et une sixième position angulaire (Alpha -),
- détecter et stocker la position du faisceau dans ladite quatrième position angulaire (Alpha),
- détecter la position du faisceau dans ladite cinquième position angulaire (Alpha +) et dans ladite sixième position angulaire (Alpha -) ;
- déplacer ledit faisceau (4) d'une manière en translation et/ou en rotation pour régler l'orientation d'une partie dudit axe optique (OA) qui s'étend entre ledit terminal d'émission (3) et ledit miroir de rebond (7) de sorte que la position du faisceau projeté dans ladite cinquième position angulaire (Alpha +) et la position du faisceau dans ladite sixième position angulaire (Alpha -) chevauchent la position du faisceau dans ladite quatrième position stockée (Alpha).

17. Outil de détection d'alignement de faisceau laser (29) pour une machine laser (1) comprenant un terminal d'émission laser (3) adaptée pour émettre un faisceau laser (4), au moins un joint de rotation (11) et une tête laser galvanométrique (5) ayant une ouverture de sortie de tête laser galvanométrique (10), dans lequel ledit terminal d'émission laser (3) est disposé en aval dudit au moins un joint de rotation (11) auquel ladite tête laser galvanométrique (5) est reliée,
ledit outil de détection d'alignement de faisceau laser (29) comprend une surface cible d'outil (30) configurée pour détecter la position du faisceau laser (4) projeté en aval de ladite ouverture de sortie de tête laser (10) pour chaque position angulaire de ladite tête laser galvanométrique (5),
**caractérisé en ce que** ledit outil de détection (29) comprend des moyens de couplage d'outil (31) configurés pour relier solidairement ledit outil de détection d'alignement de faisceau laser (29) à ladite tête laser galvanométrique (5) de sorte que ledit outil (29) tourne solidairement avec ladite tête laser galvanométrique (5) dans chaque position angulaire de ladite tête laser galvanométrique (5),
et **en ce que** ledit outil de détection (29) comprend une tige (33), dans lequel ladite tige (33) comprend lesdits moyens de couplage (31) pour coupler ledit outil de détection (29) à ladite tête laser (5),
dans lequel ladite surface cible (30) est reliée de manière translatable à ladite tige (33) par des moyens de mouvement de translation (32), dans lequel lesdits moyens de mouvement de translation (32) sont configurés pour déplacer ladite surface cible (30) à proximité et à distance de ladite ouverture de sortie de tête (10).

18. Outil de détection d'alignement de faisceau laser (29) selon la revendication 17, dans lequel ledit outil (29) comprend un cadre de surface cible (34) configuré pour supporter de manière amovible ladite surface cible, et/ou dans lequel ladite surface cible d'outil (30) est photosensible et/ou photodétectrice, et/ou dans lequel ladite surface cible d'outil (30) est interchangeable.
